# EUROPEAN PATENT SPECIFICATION

(11) **EP 3 293 896 B1**
(45) Date of publication and mention of the grant of the patent: **17.03.2021**
(21) Application number: 16789479.9
(22) Date of filing: 25.03.2016
(51) Int. Cl.: H04B 13/00

(54) **INTRA-BODY COMMUNICATION DEVICE, INTRA-BODY COMMUNICATION METHOD, AND PROGRAM**
INTRAKÖRPERKOMMUNIKATIONSVORRICHTUNG, INTRAKÖRPERKOMMUNIKATIONSVERFAHREN UND PROGRAMM
DISPOSITIF DE COMMUNICATION INTRA-CORPS, PROCÉDÉ DE COMMUNICATION INTRA-CORPS ET PROGRAMME

(30) Priority: 07.05.2015 JP 2015094665
(43) Date of publication of application: 14.03.2018
(73) Proprietor: Sony Corporation, Tokyo 108-0075 (JP)
(72) Inventor: AMANO, Sho, Tokyo 108-0075 (JP)
(74) Representative: Witte, Weller & Partner Patentanwälte mbB
(86) International application number: PCT/JP2016/059569
(87) International publication number: WO 2016/178343

(56) References cited:
- JP-A- 2005 005 787
- JP-A- 2014 146 955
- HAYAT S ET AL: "Energy Efficient MAC Protocols", HIGH PERFORMANCE COMPUTING AND COMMUNICATION&2012 IEEE 9TH INTERNATIONAL CONFERENCE ON EMBEDDED SOFTWARE AND SYSTEMS (HPCC-ICESS), 2012 IEEE 14TH INTERNATIONAL CONFERENCE ON, IEEE, 25 June 2012 (2012-06-25), pages 1185-1192, XP032255406, DOI: 10.1109/HPCC.2012.174 ISBN: 978-1-4673-2164-8
- HONG CHEN ET AL: "A statistical MAC protocol for heterogeneous-traffic human body communication", CIRCUITS AND SYSTEMS (ISCAS), 2013 IEEE INTERNATIONAL SYMPOSIUM ON, IEEE, 19 May 2013 (2013-05-19), pages 2275-2278, XP032446403, DOI: 10.1109/ISCAS.2013.6572331 ISBN: 978-1-4673-5760-9

## Description

### Technical Field

The present disclosure relates to an intra-body communication device, an intra-body communication method, and a program.

### Background Art

In recent years, research and development of intra-body communication techniques (hereinafter referred to as intra-body communication) have been performed. In a device that performs such intra-body communication, since it is generally difficult to continuously supply electricity, it is desirable to reduce power consumption for enhancement of continuity of an operation.

For example, Patent Literature 1 discloses a technique relating to an intra-body communication device that performs intra-body communication for user authentication in a communication mode that is changed when an electric field is detected and does not perform the intra-body communication in a power saving mode that is returned after termination of the user authentication.

### Citation List

### Patent Literature

Patent Literature 1: JP 2014-103523A

### Disclosure of Invention

### Technical Problem

However, in the technique disclosed in Patent Literature 1, power consumption is reduced, but it is difficult to maintain communication connection. For example, since communication with a communication partner is not performed in the power saving mode, there are cases in which a different intra-body communication device starts communication with the communication partner. In this case, a standby time until the communication with the different intra-body communication device is terminated occurs. Further, since a connection process is performed again when communication restarts, an overhead in communication increases.

In this regard, the present disclosure proposes an intra-body communication device, an intra-body communication method, and a program which are new and improved and capable of reducing power consumption of at least one of a host device or a communication partner while maintaining communication connection of intra-body communication.

### Solution to Problem

According to the present disclosure, there is provided an intra-body communication device according to claim 1.

Further, according to the present disclosure, there is provided an intra-body communication method according to claim 10.

Further, according to the present disclosure, there is provided a computer program comprising program code means causing an intra-body communication device according to claim 1 to execute the steps of the method defined in claim 10.

### Advantageous Effects of Invention

As described above, according to the present disclosure, there are provided an intra-body communication device, an intra-body communication method, and a program capable of reducing power consumption of the intra-body communication device while maintaining communication connection of intra-body communication. Note that the effects described above are not necessarily limitative. With or in the place of the above effects, there may be achieved any one of the effects described in this specification or other effects that may be grasped from this specification.

### Brief Description of Drawings

[FIG. 1] FIG. 1 is a sequence diagram illustrating an example of processes of an intra-body communication device in the related art.
[FIG. 2] FIG. 2 is a sequence diagram illustrating an example of processes of a terminal according to a first embodiment of the present disclosure.
[FIG. 3] FIG. 3 is a block diagram illustrating an example of a schematic functional configuration of the terminal according to the first embodiment.
[FIG. 4] FIG. 4 is a sequence diagram schematically illustrating an example of a process for transitioning to a first sleep mode in the terminal according to the first embodiment.
[FIG. 5] FIG. 5 is a sequence diagram schematically illustrating an example of a process for returning to a normal mode in the terminal according to the first embodiment.
[FIG. 6] FIG. 6 is a sequence diagram schematically illustrating an example of a process for transitioning to a first sleep mode in a terminal according to a first modification example of the first embodiment.
[FIG. 7] FIG. 7 is a sequence diagram schematically illustrating an example of a periodic mode change process in a terminal according to a second modification example of the first embodiment.
[FIG. 8] FIG. 8 is a sequence diagram schematically illustrating an example of a process for returning to a normal model of a terminal according to a third modification example of the first embodiment.
[FIG. 9] FIG. 9 is a sequence diagram illustrating an example of processes of a terminal according to a second embodiment of the present disclosure.
[FIG. 10] FIG. 10 is a sequence diagram schematically illustrating an example of a transitioning process in a case in which a proxy terminal notifies of transition to a second sleep mode according to the second embodiment.
[FIG. 11] FIG. 11 is a sequence diagram schematically illustrating an example of a transitioning process in a case in which a stop terminal notifies of transition to the second sleep mode according to the second embodiment.
[FIG. 12] FIG. 12 is a sequence diagram schematically illustrating an example of a returning process in a case in which the stop terminal notifies of return to a normal mode according to the second embodiment.
[FIG. 13] FIG. 13 is a sequence diagram schematically illustrating another example of a returning process in a case in which the stop terminal notifies of return to the normal mode according to the second embodiment.
[FIG. 14] FIG. 14 is a sequence diagram schematically illustrating an example of a process for transitioning to the second sleep mode in a terminal according to a first modification example of the second embodiment.
[FIG. 15] FIG. 15 is a sequence diagram schematically illustrating an example of a process for returning to a normal mode in a terminal according to a third modification example of the second embodiment.
[FIG. 16] FIG. 16 is a diagram illustrating a hardware configuration of an intra-body communication device according to an embodiment of the present disclosure.

### Mode(s) for Carrying Out the Invention

Hereinafter, (a) preferred embodiment(s) of the present disclosure will be described in detail with reference to the appended drawings. In this specification and the appended drawings, structural elements that have substantially the same function and structure are denoted with the same reference numerals, and repeated explanation of these structural elements is omitted.

The description will be provided in the following order.
1. Problems of related art
2. First embodiment (first sleep mode)
3. Second embodiment (second sleep mode)
4. Third embodiment (switching between sleep modes)
5. Hardware configuration of intra-body communication device according to an embodiment of present disclosure
6. Conclusion

### <1. Problems of related art>

First, problems of an intra-body communication device in the related art will be described.

An intra-body communication device (hereinafter referred to as a terminal) generally has a transmission function and a reception function. The transmission function performs a frame transmission process using intra-body communication, and the reception function performs a frame reception process using the intra-body communication. Therefore, the terminal is able to perform two-way communication with another terminal.

Further, as terminals in the related art, there are terminals that are operated on the basis of existing telecommunications standards relating to intra-body communication. For example, as the telecommunication standards relating to the intra-body communication, ECMA-401 is used. In ECMA-401, a time axis is divided into time slots called time division slots (TDS), one PHY protocol data unit (PDU) (hereinafter referred to as a frame) is transmitted at one TDS. The frames are alternately transmitted by respective terminals that perform communication.

In addition, information called a sequence number is added to the frames. If the frames are correctly received, the sequence number is incremented, and the incremented sequence number is added to a frame to be transmitted next time. For example, the sequence number may be binary 2-bit information.

The frames generally include data, but in a case in which there is no data to be transmitted, a frame that does not include data (hereinafter referred to as a null frame) is transmitted. A sequence number is also added to the null frame.

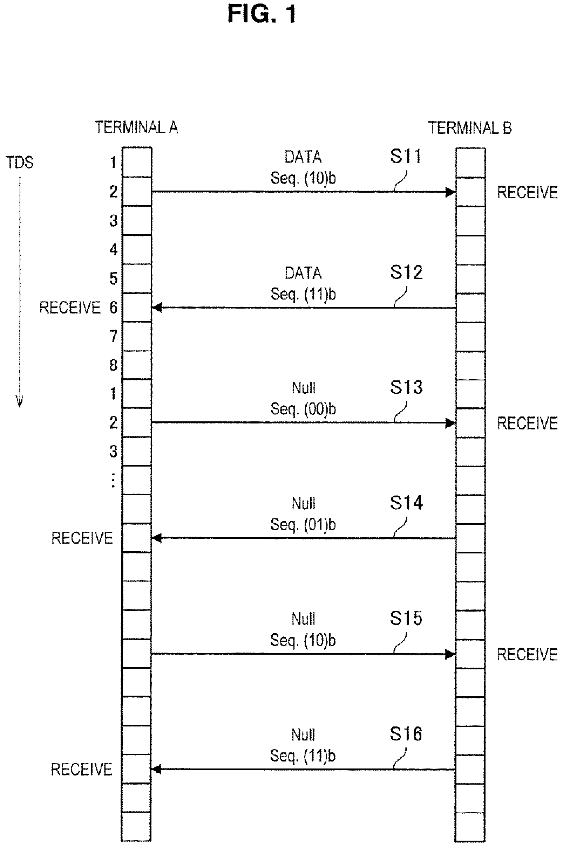

Further, an example in which a terminal A and a terminal B that are intra-body communication devices in the related art perform communication according to ECMA-401 will be described with reference to FIG. 1. FIG. 1 is a sequence diagram illustrating an example of processes of the intra-body communication device in the related art.

First, a data frame is transmitted from the terminal A, and the data frame is received by the terminal B (step S11). Specifically, the data frame is transmitted at the second TDS, and a sequence number to be added to the data frame is 2, that is, (10)b (hereinafter indicated in the form of 2(10)b). The data frame is transmitted from the terminal A, and is received by the terminal B.

Then, a data frame is transmitted from the terminal B, and the data frame is received by the terminal A (step S12). Specifically, the terminal B adds a sequence number 3(11)b obtained by incrementing the sequence number added to the received data frame to a data frame to be transmitted. The data frame to which the sequence number is added is transmitted from the terminal B, and is received by the terminal A.

Thereafter, a null frame is transmitted from the terminal A, and the null frame is received by the terminal B (step S13). Specifically, in a case in which there is no data to be transmitted in the terminal A, the terminal A generates a null frame that does not include data. The terminal A adds a sequence number 0(00)b obtained by incrementing the sequence number added to the received data frame to the generated null frame. The null frame to which the sequence number is added is transmitted from the terminal A, and is received by the terminal B.

Further, after step S13 (step S14 to step S16), since there is no data to be transmitted in either terminal, similar to step S13, as shown in FIG. 1, transmission and reception of a null frame to which a sequence number to be incremented is added are repeated.

Here, even in a case in which there is no data to be transmitted, transmission and reception of a null frame are repeated in order to maintain communication connection. For example, in streaming communication of audio or the like with a data rate lower than a bit rate of communication, since TDSs with no data to be transmitted may be continuously generated, transmission and reception of a null frame may be repeatedly generated. However, even in such a case, as described above, a transmission process, a reception process, a process of acquiring a sequence number, a process of incrementing the acquired sequence number, or the like may be performed. Thus, even in a null frame, the same power as in communication of data frames is consumed for maintenance of communication connection.

On the other hand, in a case in which there is no data to be transmitted, cutting off communication may be considered. However, there are cases in which it takes time to restart communication with the same communication partner after communication connection is cut off. For example, after communication connection is cut off, in a case in which a terminal that is a previous communication partner restarts communication with a different terminal, a standby time until the communication with the different terminal is terminated is generated. Further, since a connection process is performed again when the communication is restarted, an overhead of the communication increases.

Further, transmitting the same null frame and stopping a frame reception process may be considered. However, in ECMA-401, in a case in which a sequence number to be added to a frame is not updated, that is, not incremented, the frame is handled as a retransmission frame. Thus, if a plurality of null frames to which a sequence number that is not incremented is added is transmitted, a terminal of a communication partner may determine that retransmission frequently occurs, that is, a communication environment deteriorates, and may consider stopping communication, that is, performing cut-off of communication connection.

A method for applying a function relating to power saving in wireless communication different from intra-body communication may be considered. For example, in Bluetooth (registered trademark) communication, power saving modes such as a park mode, a hold mode, or a sniff mode are prepared. However, it is difficult to apply such a function relating to power saving to the intra-body communication as it is.

For example, in a power saving mode of wireless communication such as Bluetooth, power consumption is generally reduced as frame transmission and reception are stopped. On the other hand, in ECMA-401, in a case in which frame transmission is not performed, it is determined that TDSs are empty, and there is a possibility that the TDSs are used by another terminal. Thus, in order to secure a TDS, it is preferable to continue at least frame transmission.

Further, in Bluetooth communication, a terminal serves as any one of a master and a slave, and in a case in which a power saving mode is a mode other than a hold mode, the terminal that serves as the master is configured not to transition to the power saving mode. On the other hand, in ECMA-401, a terminal serves as any one of a talker and a listener, and it is preferable that a terminal that serves as either the talker or the listener can transition to the power saving mode.

Accordingly, the present disclosure proposes an intra-body communication device capable of reducing power consumption of at least one of the host device or a communication partner while maintaining communication connection of intra-body communication. Hereinafter, intra-body communication devices 100 according to respective embodiments of the present disclosure will be described in detail. Further, for ease of description, the intra-body communication devices 100 according to first to third embodiments are distinguished from each other by assigning numbers corresponding to the embodiments, for example, intra-body communication devices 100-1 to 100-3.

### <2. First embodiment (first sleep mode)>

Hereinbefore, the problems of the intra-body communication device in the related art have been described. Next, the intra-body communication device 100-1 (hereinafter referred to as a terminal 100-1) according to a first embodiment of the present disclosure will be described.

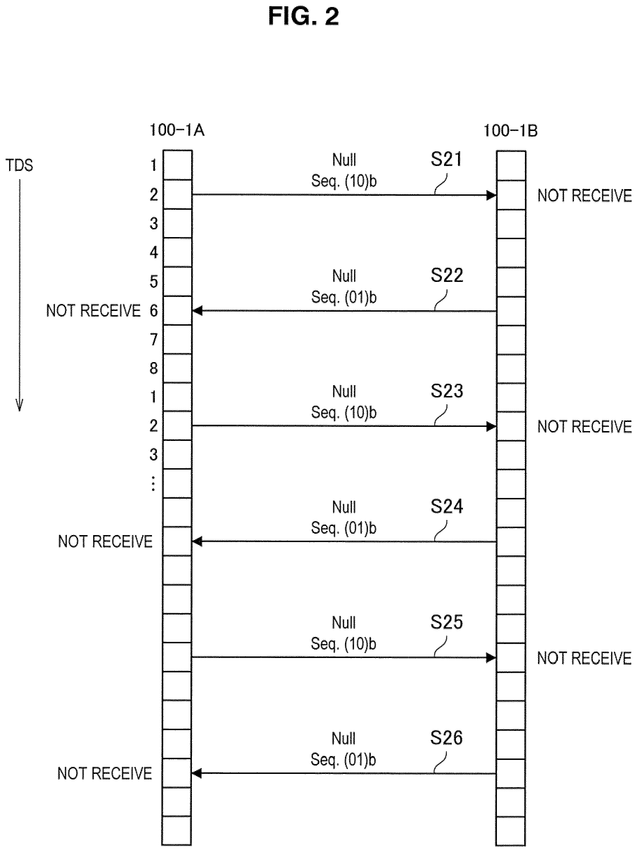

First, an overview of the terminal 100-1 according to the first embodiment will be described with reference to FIG. 2. FIG. 2 is a sequence diagram illustrating an example of processes of the terminal 100-1 according to the first embodiment of the present disclosure

In the first embodiment, the terminal 100-1 has a normal mode and a power saving mode (hereinafter referred to as a sleep mode), and has a first sleep mode as the sleep mode. The first sleep mode is a mode in which a frame transmission process is continued and a frame reception process is stopped.

For example, in the first sleep mode, as shown in Fig. 2, a terminal 100-1A and a terminal 100-1B that perform communication alternately transmit frames, but do not receive the transmitted frames. Thus, in the normal mode, a sequence number is incremented in every frame transmission, but in the first sleep mode, since a reception process is not performed, transmission of frames including the same sequence number is repeated.

If frames of the same sequence number are consecutively transmitted, a terminal that is a communication partner determines that retransmission of frames frequently occurs, that is, a communication environment deteriorates, and may stop the communication. Thus, in transitioning to the first sleep mode or before the transition, it is preferable to confirm the presence or absence of support of the first sleep mode between terminals and to confirm that an operation in the first sleep mode is not handled as an error.

In this way, in the first sleep mode, since the reception process is stopped while the transmission process is continued, for example, if the first sleep mode is selected in a case in which there is no data to be transmitted and a null frame is transmitted, it is possible to reduce power consumption while the null frame is being transmitted. Hereinafter, the first embodiment will be described in detail.

### <2-1. Configuration of device>

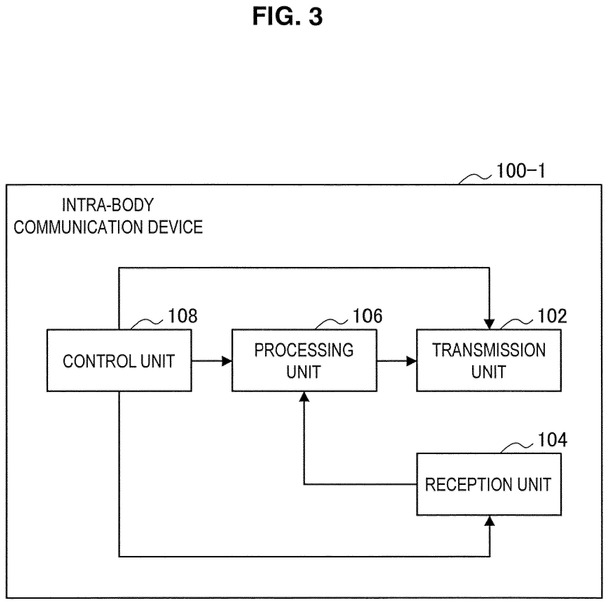

Subsequently, a functional configuration of the terminal 100-1 according to the first embodiment of the present disclosure will be described with reference to FIG. 3. FIG. 3 is a block diagram illustrating an example of a schematic configuration of the terminal 100-1 according to the first embodiment of the present disclosure.

The terminal 100-1 includes a transmission unit 102, a reception unit 104, a processing unit 106, and a control unit 108, as shown in FIG. 3.

The transmission unit 102 performs transmission of frames using intra-body communication. Specifically, the transmission unit 102 performs frame transmission (hereinafter referred to as first frame transmission) using intra-body communication within a frame transmission period of the host terminal that is decided in advance, regardless of the presence or absence of data to be transmitted, while communication is continued. For example, the first frame transmission is performed according to ECMA-401. In this case, the frame transmission period corresponds to TDSs, and each TDS of terminals is decided between terminals in starting connection, namely, in association. A frame transmitted by the transmission unit 102 is generated by the processing unit 106 (which will be described later).

Further, in a case in which a transmitted frame is not received, that is, in a case in which a communication partner fails in frame reception, the transmission unit 102 retransmits the same frame. For example, the transmission unit 102 performs frame retransmission in a case in which a sequence number added to a frame received from the communication partner after frame transmission is not a value obtained by incrementing a sequence number added to a frame transmitted by the host terminal.

The reception unit 104 performs frame reception using intra-body communication. Specifically, the reception unit 104 receives a frame transmitted using intra-body communication. For example, if a frame is transmitted from a terminal that is a communication partner, the reception unit 104 receives the transmitted frame, and provides the received frame to the processing unit 106.

The processing unit 106 performs generation and analysis of a frame. Specifically, the processing unit 106 generates a frame such as a PS-REQ frame or a PS-ACK frame (which will be described later) on the basis of a command from the control unit 108 and provides the generated frame to the transmission unit 102.

Further, the processing unit 106 acquires, updates, and uses frame exchange information updated in frame transmission based on a received frame. More specifically, the processing unit 106 acquires frame exchange information from a frame received by the reception unit 104, and updates the acquired frame exchange information. Further, the processing unit 106 adds the updated frame exchange information to a generated frame. For example, the frame exchange information is the above-described sequence number, and the processing unit 106 increments a sequence number acquired from the received frame. Further, the processing unit 106 adds the incremented sequence number to the generated frame.

The control unit 108 generally controls an operation of the terminal 100-1. Specifically, the control unit 108 selects an operation mode of the terminal 100-1. For example, the operation mode of the terminal 100-1 includes the normal mode and the first sleep mode as described above.

The control unit 108 controls whether to allow reception of a frame of the reception unit 104 while causing the transmission unit 102 to continue frame transmission every frame transmission period of the host terminal, in the first sleep mode. More specifically, if an exchange between a frame relating to notification of stopping of frame reception of the reception unit 104 (hereinafter referred to as a transition notification frame or a PS-REQ frame) and a frame that serves as a response to the transition notification frame (hereinafter referred to as a transition notification response frame or a PS-ACK frame), which is a first frame exchange, is performed, the control unit 108 causes the reception unit 104 to stop frame reception. The PS-REQ frame and the PS-ACK frame may be a frame of a level corresponding to a physical (PHY) layer or may be a frame of a level corresponding to a media access control (MAC) layer.

### (Transitioning to first sleep mode)

For example, in a case in which the host terminal transitions to the first sleep mode by itself, the control unit 108 transmits a PS-REQ frame to a transmission partner through the transmission unit 102 and the processing unit 106. Further, if a PS-ACK frame indicating permission of transitioning to the first sleep mode is received from the communication partner, the control unit 108 stops the operation of the reception unit 104, namely, frame reception, and the operation of the processing unit 106, namely, increment of a sequence number. The control unit 108 performs a process for transitioning to a sleep mode in accordance with a sleep request from an application.

Further, in a case in which the host terminal transitions to the first sleep mode in accordance with notification from a communication partner, if a PS-REQ frame is received from the communication partner, the control unit 108 transmits a PS-ACK frame indicating permission of transitioning to the first sleep mode through the transmission unit 102 and the processing unit 106. In addition, the control unit 108 stops the operations of the reception unit 104 and the processing unit 106 after transmission of the PS-ACK frame.

In the above description, an example in which a PS-ACK frame indicating permission or non-permission of transitioning to the first sleep mode is used has been described, but in a case in which a response indicating non-permission is not performed, a different frame such as a null frame may be used instead of the PS-ACK frame.

Further, in the above description, an example in which if a PS-ACK frame is received or is transmitted, the terminal 100-1 transitions to the first sleep mode has been described, but a timing of the transitioning to the first sleep mode may be instructed, or may be shared. Specifically, information indicating a stop timing of frame reception of the reception unit 104 is added to a PS-REQ frame or a PS-ACK frame, and the control unit 108 causes the reception unit 104 to stop frame reception on the basis of the information.

For example, the frame reception stop timing may be determined so that each terminal that performs communication transitions to the first sleep mode at the same timing using an elapsed time from reception of a PS-ACK frame (the number of time segments or TDSs) or an elapsed time from a connection process (transmission or reception of Association Request 1, Association Response 1 or Association Request 2). The time segments include a plurality of TDS, for example, eight TDSs.

In a case in which a PS-REQ frame and a PS-ACK frame are P-DU frames, the PS-REQ frame or the like is divided into at least two PHY frames, that is, P-PDU frames, and are transmitted over at least two TDSs. In this case, if one terminal 100-1 transitions to the first sleep mode on the basis of partial reception of the P-DU frame, it may be difficult for the other terminal 100-1 to transition to the first sleep mode. However, as the timing of the transitioning to the first sleep mode becomes uniform as described above, it is possible to prevent the occurrence of such a situation.

Further, the control unit 108 controls power supply to the respective units of the terminal 100-1, particularly, to the transmission unit 102, the reception unit 104, and the processing unit 106 to thereby control the presence and absence of operations of the respective units. Alternatively, the control unit 108 may control the presence and absence of the operations of the respective units of the terminal 100-1 through processing of hardware or software rather than the power supply control.

### (Returning to normal mode)

If a predetermined time (hereinafter, referred to as a temporary return timing) arrives as a third time during the first sleep mode, the control unit 108 causes the reception unit 104 to perform frame reception for a time that is decided in advance (hereinafter, referred to as a temporary return period). Further, if a second frame exchange is performed during the temporary return period, the control unit 108 causes the reception unit 104 to start frame reception.

Specifically, if an exchange between a frame (hereinafter, referred to as a return notification frame or a PS-WUP frame) relating to notification of start of frame reception of the reception unit 104 and a frame (hereinafter, referred to as a return notification response frame) that is a response to the return notification frame, which is the second frame exchange, is performed in the temporary return period, the control unit 108 starts frame reception of the reception unit 104.

For example, the control unit 108 returns the host terminal to the normal mode for a temporary return period whenever a time that is decided in advance such as an elapsed time from a connection process arrives as a temporary return timing. It is preferable that the temporary return time is set to be long in consideration of a failure possibility of frame reception.

Further, in a case in which the host terminal returns to the normal mode by itself, the control unit 108 transmits a PS-WUP frame to a communication partner through the transmission u nit 102 and the processing unit 106 in the temporary return period. In addition, if a null frame that is a response to the PS-WUP frame is received from the communication partner, the control unit 108 restarts the operations of the reception unit 104 and the processing unit 106. Here, the restarting of the operations means that the operations are continued even after the temporary return period elapses.

In a case in which the host terminal returns to the normal mode in accordance with notification from a communication partner, if a PS-WUP frame is received from the communication partner, the control unit 108 transmits a null frame that is a response to the PS-WUP frame through the transmission unit 102 and the processing unit 106. Further, after transmission of the null frame, the control unit 108 restarts the operations of the reception unit 104 and the processing unit 106. Whether the received null frame is the response with respect to the PS-WUP frame is determined on the basis of a sequence number. For example, the control unit 108 determines whether a sequence number added to the null frame is a value obtained by incrementing a sequence number added to the PS-WUP frame.

In the above description, an example in which a frame that is a response with respect to a PS-WUP frame is a null frame has been described, but the frame that is the response may be a different frame such as a specific frame that is separately prepared or a data frame.

Further, the control unit 108 may cause the transmission unit 102 and the processing unit 106 to continue retransmission of the PS-WUP frame until the null frame that is the response to the PS-WUP frame is received. In addition, an upper limit on the number of times of retransmission may be provided, and if the number of times of retransmission reaches the upper limit, the control unit 108 may cause the transmission unit 102 or the like to stop retransmission.

### <2-2. Processes of device>

Next, processes of the terminal 100-1 according to this embodiment will be described.

### (Process for transitioning to first sleep mode)

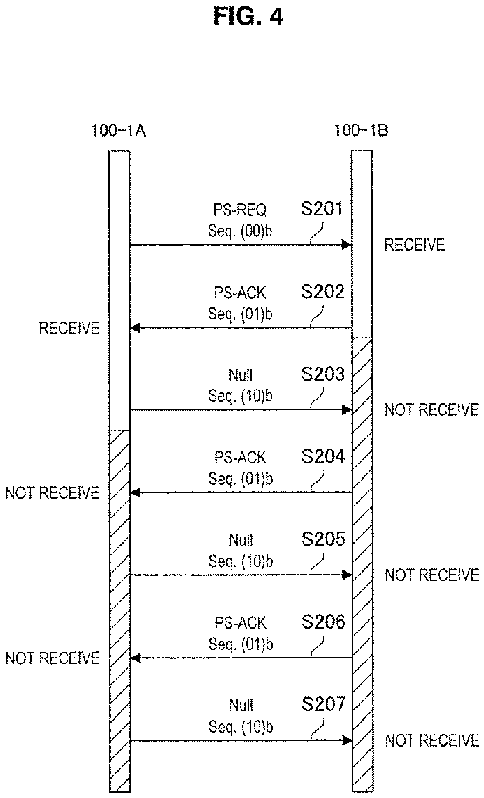

First, a process for transitioning to the first sleep mode in the terminal 100-1 according to the embodiment will be described with reference to FIG. 4. FIG. 4 is a sequence diagram schematically illustrating an example of the process for transitioning to the first sleep mode of the terminal 100-1 according to this embodiment.

If transitioning to the first sleep mode is decided, a terminal 100-1A transmits a PS-REQ frame (step S201). Specifically, the control unit 108 causes the processing unit 106 to generate a PS-REQ frame, and the generated PS-REQ frame is transmitted by the transmission unit 102. For example, a sequence number added to the PS-REQ frame is 0(00) b.

A terminal 100-1B that receives the PS-REQ frame transmits a PS-ACK frame, and transitions to the first sleep mode (step S202). Specifically, if the PS-REQ frame is received by the reception unit 104, the control unit 108 causes the processing unit 106 to generate a PS-ACK frame, and the generated PS-ACK frame is transmitted by the transmission unit 102. Further, the control unit 108 stops the operations of the reception unit 104 and the processing unit 106 after transmission of the PS-ACK frame. For example, a sequence number added to the PS-ACK frame is 1 (01) b obtained by incrementing the sequence number added to the received PS-REQ frame.

The terminal 100-1A that receives the PS-ACK frame transmits a null frame, and transitions to the first sleep mode (step S203). Specifically, if the PS-ACK frame is received by the reception unit 104, the control unit 108 causes the processing unit 106 to generate a null frame, and the generated null frame is transmitted by the transmission unit 102. Further, the control unit 108 stops the operations of the reception unit 104 and the processing unit 106 after transmission of the null frame. For example, a sequence number added to the null frame is 2 (10) b obtained by incrementing the sequence number added to the received PS-ACK frame.

After step S204, that is, during the first sleep mode, each of the terminal 100-1A and the terminal 100-1B continues retransmission of the same frames as a frame that is transmitted before transitioning to the first sleep mode and after any other frame, in each frame transmission period. Further, since each of the terminal 100-1A and the terminal 100-1B is in the first sleep mode, that is, in a state where the operations of the reception unit 104 and the processing unit 106 are stopped, reception of a frame and increment of a sequence number are not performed.

### (Process for returning to normal mode)

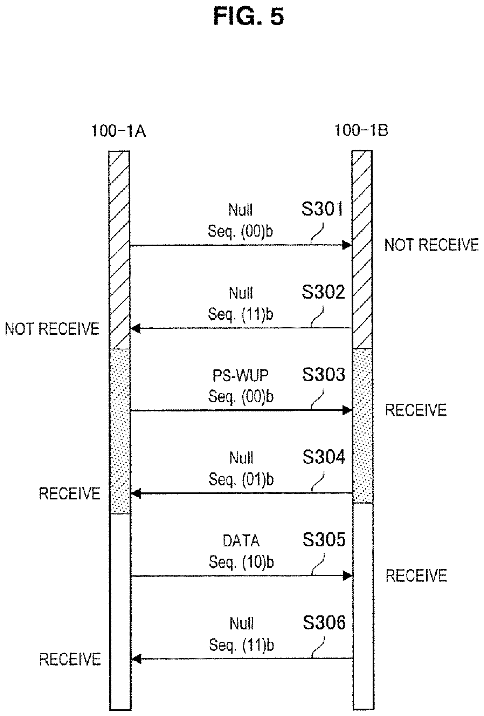

Subsequently, a process for returning to the normal mode of the terminal 100-1 according to this embodiment will be described with reference to FIG. 5. FIG. 5 is a sequence diagram schematically illustrating an example of a process for returning to the normal mode in the terminal 100-1 according to this embodiment.

The terminals 100-1A and 100-1B in the first sleep mode transmit a null frame to each other (steps S301 and S302). Specifically, the transmission unit 102 transmits the same frame every frame transmission period of the host terminal. Since the reception unit 104 and the processing unit 106 stop the operations, reception of a frame is not performed.

Then, if a temporary return timing arrives, the terminals 100-1A and 100-1B temporarily return to the normal mode. Specifically, the control unit 108 causes the reception unit 104 and the processing unit 106 to restart the operations for a temporary return period as indicated by dot hatching in FIG. 5, for example, whenever a predetermined time elapses from a connection process, during the first sleep mode.

Then, in a case in which the terminal 100-1A completely returns to the normal mode, the terminal 100-1A transmits a PS-WUP frame (step S303). Specifically, in a case in which the terminal 100-1A completely returns to the normal mode, the control unit 108 causes the processing unit 106 to generate the PS-WUP frame, and the generated PS-WUP frame is transmitted by the transmission unit 102. For example, a sequence number added to the PS-WUP frame is 0(00) b.

The terminal 100-1B that receives the PS-WUP frame transmits a null frame, and returns to the normal mode (step S304). Specifically, if the PS-WUP frame is received by the reception unit 104, the control unit 108 causes the processing unit 106 to generate a null frame that is a response to the PS-WUP frame, and the generated null frame is transmitted by the transmission unit 102. For example, a sequence number added to the null frame is 1 (01) b obtained by incrementing the sequence number added to the PS-WUP frame.

The terminal 100-1A that receives the null frame returns to the normal mode and transmits a data frame (step S305). Specifically, if the null frame to which the incremented sequence number is added is received by the reception unit 104, the control unit 108 continues the operations of the reception unit 104 and the processing unit 106. Further, in a case in which there is data to be transmitted, the processing unit 106 generates a data frame, and the generated data frame is transmitted by the transmission unit 102. For example, a sequence number added to the data frame is 2 (10) b obtained by incrementing the sequence number added to the received null frame.

In a case in which there is no data to be transmitted, the terminal 100-1B that receives the data frame transmits a null frame (step S306). Specifically, if the data frame is received by the reception unit 104, in a case in which there is no data frame to be transmitted, the processing unit 106 generates a null frame, and the generated null frame is transmitted by the transmission unit 102. For example, a sequence number added to the null frame is 3(11) b obtained by incrementing the sequence number added to the received data frame.

In the above description, an example in which the terminal 100-1 that transmits a PS-WUP frame temporarily returns to the normal mode has been described, but if a temporary return timing arrives during the first sleep mode, the terminal 100-1 that transmits the PS-WUP frame may completely return to the normal mode.

In this way, according to the first embodiment of the present disclosure, the terminal 100-1 receives a frame using intra-body communication, and transmits a frame using intra-body communication in a frame transmission period of the host terminal that is decided in advance. Further, the terminal 100-1 controls whether to allow reception of a frame while continuing frame transmission every frame period. Thus, it is possible to reduce power consumption of at least one of the host device or a communication partner while maintaining communication connection of intra-body communication as frame reception is stopped while continuing frame transmission.

Further, if the first frame exchange is performed, the terminal 100-1 stops frame reception. Thus, transitioning to the first sleep mode is clearly shown, and thus, it is possible to prevent the occurrence of a situation where mismatching occurs between terminals with respect to transitioning to a sleep mode such as transitioning of only one terminal 100-1 to a sleep mode.

In addition, the first frame exchange includes an exchange between a transition notification frame relating to notification of stop of frame reception and a transition notification response frame that is a response to the transition notification frame. Thus, transitioning to the first sleep mode is notified using a dedicated frame, and thus, it is possible to easily determine the transitioning to the first sleep mode. As a result, it is possible to simplify the process of transitioning to the first sleep mode.

Further, if a third time that is decided in advance arrives after stopping of frame reception, the terminal 100-1 performs frame reception for a predetermined period, and starts frame reception on the basis of the second frame exchange performed in the predetermined period. Thus, returning to the normal mode is determined during the first sleep mode, and thus, it is possible to restart communication at a suitable timing.

In addition, the second frame exchange includes an exchange between a return notification frame relating to notification of the start of frame reception and a return notification response frame that is a response to the return notification frame. Thus, returning to the normal mode is notified using a dedicated frame, and thus, it is possible to easily determine the returning to the normal mode. As a result, it is possible to simplify the process for returning to the normal mode.

### <2-3. Modification example>

Hereinbefore, the first embodiment of the present disclosure has been described. The embodiment is not limited to the above-mentioned example. Hereinafter, first to third modification examples of the embodiment will be described.

### (First modification example)

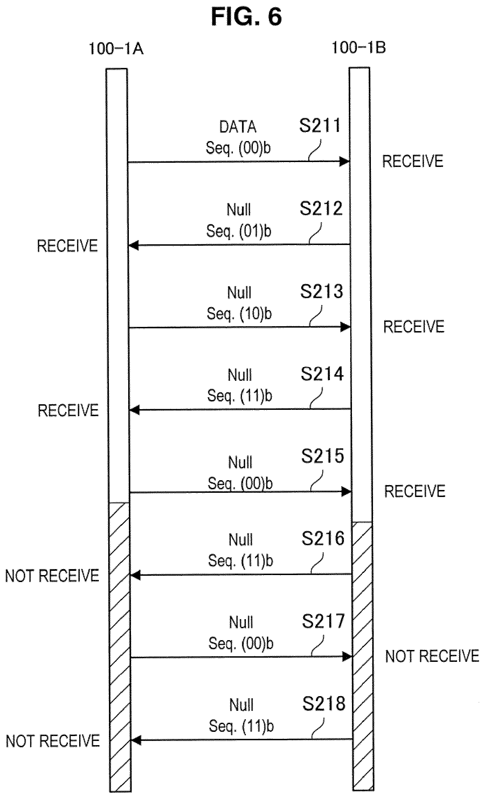

As a first modification example of this embodiment, a frame exchange that is a trigger of transitioning to the first sleep mode, which is the first frame exchange, may be a consecutive exchange of a null frame. Specifically, if the null frame is consecutively exchanged over a predetermined number of times, the control unit 108 stops the operations of the reception unit 104 and the processing unit 106. Further, processes of this modification example will be described in detail with reference to FIG. 6. FIG. 6 is a sequence diagram schematically illustrating an example of a process for transitioning to the first sleep mode in the terminal 100-1 according to the first modification example of this embodiment. Description about substantially the same processes as the processes in the first embodiment will not be repeated.

In a case in which there is data to be transmitted, the terminal 100-1A transmits a data frame (step S211), and in a case in which there is no data frame to be transmitted, the terminal 100-1B that receives the data frame transmits a null frame (step S212).

After step S212, since there is no data frame to be transmitted in both the terminal 100-1A and the terminal 100-1B, as shown in FIG. 6, transmission and reception of a null frame are consecutively performed.

Here, the terminals 100-1A and 100-1B count the number of times of transmission and reception of the null frame, and if the number of counting times reaches a predetermined number of times, the terminals 100-1A and 100-1B transition to the first sleep mode. Specifically, whenever the null frame is transmitted by the transmission unit 102, or whenever the null frame is received by the reception unit 104, the control unit 108 counts up the number of times, and if the number of times reaches the predetermined number of times, the control unit 108 stops the operations of the reception unit 104 and the processing unit 106.

For example, a case in which the predetermined number of times is 4 will be described. As shown in FIG. 6, with respect to the terminal 100-1A, the null frame exchange is consecutively performed four times from reception of the null frame in step S212 to transmission of the null frame in step S215. Thus, the terminal 100-1A transitions to the first sleep mode after transmission of the null frame in step S215.

Further, as shown in FIG. 6, with respect to the terminal 100-1B, a null frame is transmitted and received consecutively four times from transmission of the null frame in step S212 to reception of the null frame in step S215. Thus, the terminal 100-1B transitions to the first sleep mode after reception of the null frame in step S215.

In the above description, an example in which if a null frame is consecutively exchanged a predetermined number of times, the terminal 100-1 transitions to the first sleep mode has been described, but the terminal 100-1 may transition to the first sleep mode if the null frame is consecutively exchanged for a predetermined time. Further, the predetermined time may be determined in a connection process or may be a fixed value retained by the terminal 100-1.

In this way, according to the first modification example of this embodiment, the first frame exchange includes a consecutive exchange of a frame transmitted in a case in which there is no data to be transmitted. Thus, the terminal 100-1 transitions to the first sleep mode using a frame that is prepared in an existing intra-body communication standard, and thus, it is possible to cut down the degree of improvement in a terminal that is operated according to the existing intra-body communication standard, to thereby cut down cost required for application of the first sleep mode to the existing terminal. Further, it is possible to transition to the first sleep mode at a timing when there is no data to be transmitted.

### (Second modification example)

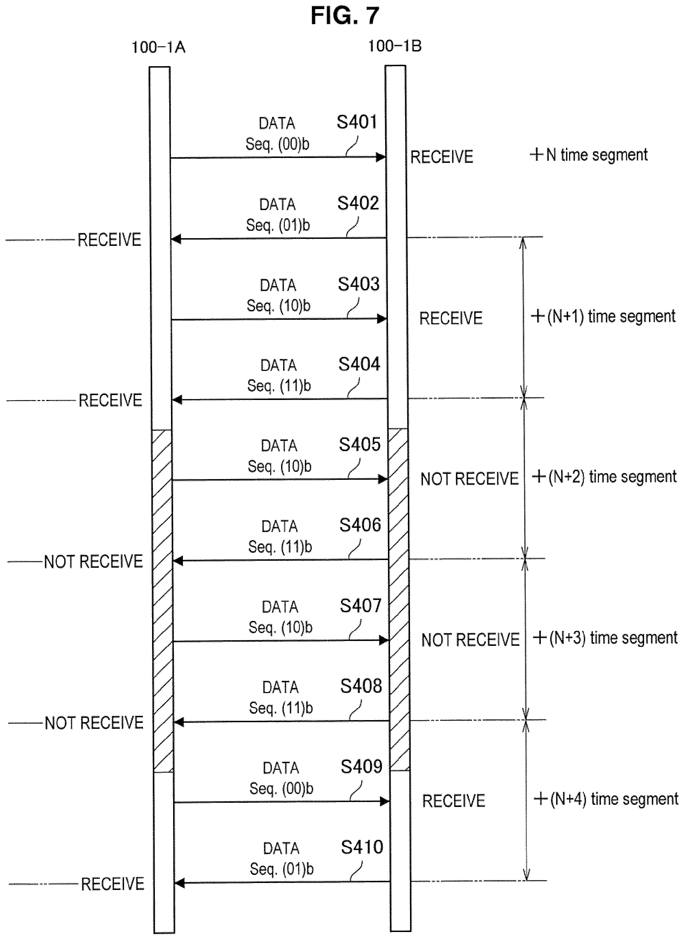

As a second modification example of this embodiment, transition to the first sleep mode may be performed on the basis of arrival of a time that is decided in advance (hereinafter, referred to as a first transition timing) as a first time, and returning to the normal mode may be performed on the basis of arrival of a time that is decided in advance (hereinafter, referred to as a first return timing) as a second time. Specifically, if the first transition timing arrives, the control unit 108 causes the reception unit 104 to stop frame reception. Further, if the first return timing arrives, the control unit 108 causes the reception unit 104 to start frame reception. Further, processes of this modification example will be described in detail with reference to FIG. 7. FIG. 7 is a sequence diagram schematically illustrating an example of a periodic mode change process of the terminal 100-1 according to the second modification example of this embodiment. Description about substantially the same processes as the processes in the first embodiment will not be described.

In a case in which there is data to be transmitted, the terminal 100-1A and the terminal 100-1B transmit a data frame to each other (steps S401 to S404). In a case in which there is no data to be transmitted, a null frame is transmitted.

Here, the terminal 100-1 switches its mode in accordance with an elapsed time from a reference time point. Specifically, in a case in which the elapsed time from the reference time point is a predetermined time, that is, at the first transitioning timing or the first return timing, the control unit 108 performs switching between the presence and absence of operations of the reception unit 104 and the processing unit 106.

For example, the reference time point may be a time point at which a connection process is performed, and the predetermined time may be a predetermined multiple of a time segment. As shown in FIG. 7, the terminals 100-1A and 100-1B transition to the first sleep mode after elapse of a (N+1) time segment from the reference time point, that is, after frame transmission in step S404. Then, the terminals 100-1A and 100-1B return to the normal mode after elapse of a (N+3) time segment from the reference time point, that is, after frame transmission in step S408. The number of elapsed time segments after the reference time point is counted by the control unit 108.

In the above description, an example in which the reference time point is a time point of a connection process has been described, but the reference time point may be a mode switching time point. For example, a time point in transitioning to the first sleep mode after processing of step S404 as shown in FIG. 7 becomes the reference time point, and the terminal 100-1 returns to the normal mode after 2-time segments from the reference time point. Further, a time point in returning to the normal mode becomes the next reference time point.

Further, in the above description, an example in which a unit of elapsed time from the reference time point is time segment is described, but the unit of the elapsed time may be another unit such as TDS.

Further, a period during which each mode is maintained may be decided in advance. For example, in a connection process or the like, each of a period during which the first sleep mode is maintained and a period during which the normal mode is maintained may be determined, and a duty ratio of the first sleep mode and the normal mode may be determined.

In addition, in the above description, an example in which both transition to the first sleep mode and returning to the normal mode are performed on the basis of arrival of a time that is decided in advance has been described, but only any one of the transition to the first sleep mode and the returning to the normal mode may be performed on the basis of arrival of a time that is decided in advance. For example, the transition to the first sleep mode may be performed on the basis of an exchange between a PS-REQ frame and a PS-ACK frame, and the returning to the normal mode may be performed on the basis of the first return timing.

In this way, according to the second modification example of this embodiment, if the first time that is decided in advance arrives, the terminal 100-1 stops frame reception. Further, if the second time that is decided in advance arrives after stop of the frame reception, the terminal 100-1 starts frame reception. Thus, the mode of the terminal 100-1 is switched without performing a special process such as a frame exchange, and thus, it is possible to prevent complexity of processes due to the addition of the first sleep mode.

### (Third modification example)

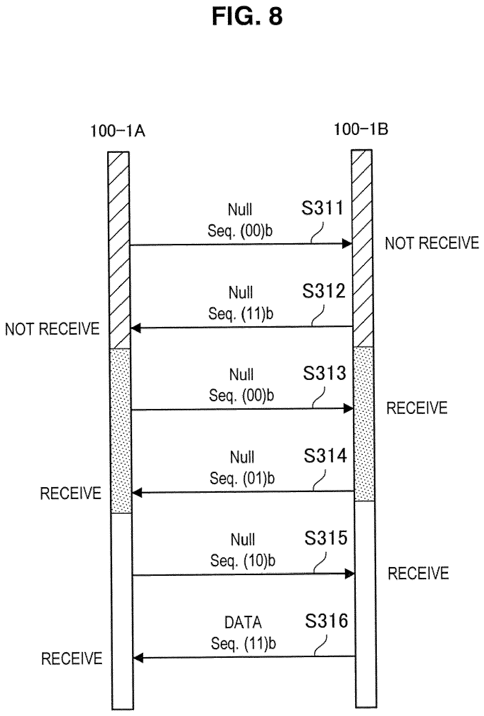

As a third modification example of this embodiment, a frame exchange that is a trigger of returning to the normal mode, which is the second frame exchange, may be an exchange between a frame transmitted in a temporary return period and a frame including frame exchange information obtained by updating frame exchange information included in the frame. Specifically, if an exchange between a frame (hereinafter, referred to as a preceding frame) transmitted in a temporary return period and a frame including a sequence number obtained by updating a sequence number added to the preceding frame is performed, the control unit 108 starts the operations of the reception unit 104 and the processing unit 106. Further, processes of this modification example will be described in detail with reference to FIG. 8. FIG. 8 is a sequence diagram schematically illustrating an example of a process for returning to the normal mode of the terminal 100-1 according to the third modification example of this embodiment.

The terminal 100-1A and the terminal 100-1B in the first sleep mode transmit a null frame to each other (steps S311 and S312), and if a temporary return timing arrives, the terminal 100-1A and the terminal 100-1B temporarily return to the normal mode.

Then, similar to step S311, the terminal 100-1A transmits a null frame (step S313). Specifically, the transmission unit 102 transmits the same null frame transmitted in the first sleep mode. For example, a sequence number added to the null frame is 0 (00) b that is the same as a sequence number added to the frame transmitted up to then.

The terminal 100-1B that receives the null frame transmits a null frame that is a response to the received null frame and returns to the normal mode (step S314). Specifically, if a null frame is received by the reception unit 104, the control unit 108 causes the processing unit 106 to generate a null frame that is a response to the received null frame, and the generated null frame is transmitted by the transmission unit 102. Further, after transmission of the null frame, the control unit 108 restarts the operations of the reception unit 104 and the processing unit 106. For example, a sequence number added to the null frame is 1 (01) b obtained by incrementing the sequence number added to the received null frame.

The terminal 100-1A that receives the null frame returns to the normal mode, and in a case in which there is no data to be transmitted, the terminal 100-1A transmits a null frame (step S315). Specifically, if the null frame to which the incremented sequence number is added is received by the reception unit 104, the control unit 108 restarts the operations of the reception unit 104 and the processing unit 106. Further, in a case in which there is no data to be transmitted, the processing unit 106 generates a null frame, and the generated null frame is transmitted by the transmission u nit 102. For example, a sequence number added to the null frame is 2 (10) b obtained by incrementing the sequence number added to the received null frame.

In a case in which there is data to be transmitted, the terminal 100-1B transmits a data frame (step S316).

Only the terminal 100-1 that transmits a sequence number later in order than a sequence number added to a frame transmitted by a communication partner can show the communication partner returning to the normal mode through an increment of the sequence number.

In this way, according to the third modification example of this embodiment, the second frame exchange includes an exchange between a frame transmitted in a temporary return period and a frame including frame exchange information obtained by updating frame exchange information included in the frame. Thus, the terminal 100-1 returns to the normal mode using information that is prepared in an existing intra-body communication standard, and thus, it is possible to cut down the degree of improvement in a terminal that is operated according to the existing intra-body communication standard, thereby reducing cost required for application of the first sleep mode to the existing terminal.

### <3. Second embodiment (second sleep mode)>

Hereinbefore, the terminal 100-1 according to the first embodiment of the present disclosure has been described. Subsequently, a terminal 100-2 according to a second embodiment of the present disclosure will be described.

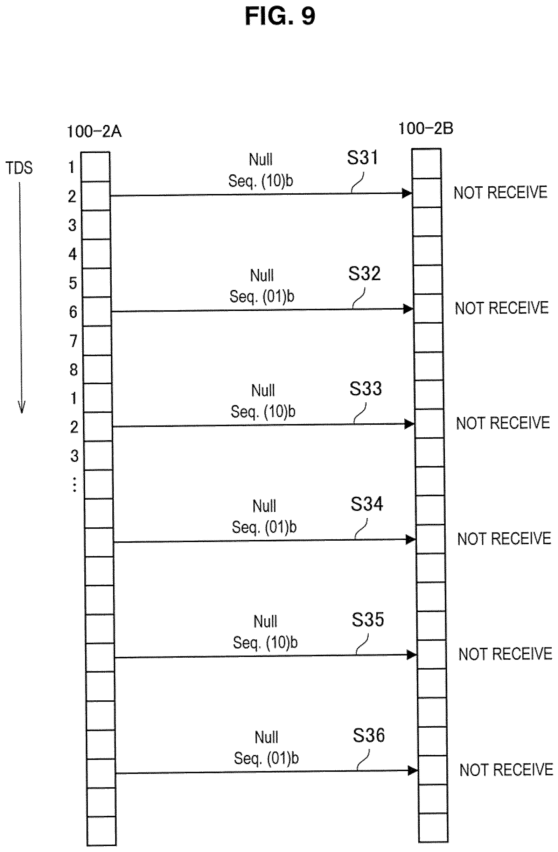

First, an overview of the terminal 100-2 according to the second embodiment will be described with reference to FIG. 9. FIG. 9 is a sequence diagram illustrating an example of processes of the terminal 100-2 according to the second embodiment of the present disclosure.

In the second embodiment, the terminal 100-2 includes a second sleep mode different from the first sleep mode as a sleep mode. Specifically, the second sleep mode is a mode in which one terminal 100-2 performs frame transmission on behalf of the other terminal 100-2 and the other terminal 100-2 stops transmission and reception of a frame.

For example, a terminal 100-2A performs transmission of a null frame in a frame transmission period of the host terminal, and additionally, performs transmission of a null frame in a frame transmission period of a terminal 100-2B. Thus, as shown in FIG. 9, frame transmission is unilaterally performed. On the other hand, the terminal 100-2B stops frame transmission and reception of a frame, and increment of a sequence number in the second sleep mode. Since frame transmission from one terminal 100-1 is unilaterally performed in the second sleep mode, transmission of a frame including the same sequence number is repeated.

### <2-2. Configuration of device>

A functional configuration of a terminal 100-2 according to the second embodiment of the present disclosure is substantially the same as the functional configuration in the first embodiment, but a part of functions are different therefrom. Hereinafter, a terminal 100-2 that acts for transmission (hereinafter, referred to as a proxy terminal) and a terminal 100-2 that stops transmission (hereinafter, referred to as a stop terminal) will be respectively described. Description about functions which are substantially the same as the functions in the first embodiment will not be repeated.

### (Determination of proxy terminal and stop terminal)

The control unit 108 sets a role of the host device to any one of a proxy terminal and a stop terminal on the basis of information shared with a communication partner. Specifically, the control unit 108 transmits a frame including information (hereinafter, referred to as proxy information) such as a flag indicating the presence or absence of acceptance of the proxy terminal to the communication partner through the transmission unit 102 and the processing unit 106. For example, the proxy information may be stored in reserved for future use (RFU) bits of Association Request 1 or Association Response 2 that is exchanged in a connection process.

In the above description, an example in which the proxy information corresponds to a flag has been described, but the proxy information may be information indicating the degree of possibility of proxy. For example, the proxy information may be information decided in accordance with the capacity or level of a battery of the terminal 100-2. Further, in a case in which a value relating to proxy information of the host terminal is larger than a value relating to proxy information of a communication partner, the control unit 108 causes the host terminal to be operated as a proxy terminal. On the other hand, in a case in which the value relating to the proxy information of the host terminal is smaller than the value relating to the proxy information of the communication partner, the control unit 108 causes the host terminal to be operated as a stop terminal. In a case in which the values relating to the two types of proxy information are the same, a role of a terminal may be set in advance in the terminal 100-2. For example, a terminal that notifies transitioning to the second sleep mode is operated as a proxy terminal.

Further, in the above description, an example in which the proxy information is shared using a frame exchanged in a connection process has been described, but the proxy information may be shared using a frame transmitted after the start of the connection process. For example, the proxy information may be included in the PS-REQ frame or the PS-ACK frame, or may be included in a null frame or a data frame.

### (Transitioning to second sleep mode)

The transmission unit 102 of the proxy terminal 100-2 performs frame transmission (hereinafter, referred to as second frame transmission) in a frame transmission period of a communication partner in addition to the first frame transmission in the second sleep mode. Further, the transmission unit 102 of the stop terminal 100-2 stops the first frame transmission while the second frame transmission is being performed in the frame transmission period of the host terminal by the communication partner.

Specifically, if an exchange between a transition notification frame relating to notification of start of the second frame transmission and a transition notification response frame that is a response to the transition notification frame, which is the first frame exchange, is performed, the transmission unit 102 of the proxy terminal 100-2 starts the second frame transmission. Further, if the exchange between the transition notification frame and the transition notification response frame or an exchange between the transition notification response frame and a frame that is a response to the transition notification frame, which is the first frame exchange, is performed, the transmission unit 102 of the stop terminal 100-2 stops the first frame transmission.

### (Transitioning pattern A: notification of transitioning to second sleep mode from proxy terminal)

In a case in which the host terminal transitions to the second sleep mode by itself, the control unit 108 of the proxy terminal 100-2 transmits a PS-REQ frame through the transmission unit 102 and the processing unit 106. Further, if a PS-ACK frame indicating permission of transitioning to the second sleep mode is received from the communication partner, the control unit 108 transmits an arbitrary frame including an incremented sequence number, for example, a null frame through the transmission unit 102 and the processing unit 106. Then, the control unit 108 stops the operations of the reception unit 104 and the processing unit 106, and then, causes the transmission unit 102 to start the second frame transmission.

In a case in which the host terminal transitions to the second sleep mode in accordance with notification from a communication partner, if a PS-REQ frame is received from the communication partner, the control unit 108 of the stop terminal 100-2 transmits a PS-ACK frame indicating permission of transitioning to the second sleep mode through the transmission unit 102 and the processing unit 106. Further, after reception of an arbitrary frame including an incremented sequence number that is a response to the PS-ACK frame, for example, a null frame, the control unit 108 stops the operations of the transmission unit 102, the reception unit 104, and the processing unit 106.

As described above, the proxy terminal 100-2 transitions to the second sleep mode, and then, the stop terminal 100-2 transitions to the second sleep mode. This is performed to maintain frame transmission, that is, to maintain communication connection. For example, if only the stop terminal 100-2 transitions to the second sleep mode in a state in which the proxy terminal 100-2 does not transition to the second sleep mode, that is, does not start the second frame transmission, frame transmission in the frame transmission period of the stop terminal 100-2 is not performed. As a result, there is a possibility that communication collision occurs as another terminal starts frame transmission in the frame transmission period. Thus, the stop terminal 100-2 transitions to the second sleep mode after confirming transitioning to the second sleep mode of the proxy terminal 100-2.

### (Transitioning pattern B: notification of transitioning to second sleep mode from stop terminal)

In a case in which the host terminal transitions to the second sleep mode by itself, the control unit 108 of the stop terminal 100-2 transmits a PS-REQ frame through the transmission unit 102 and the processing unit 106. Further, if a PS-ACK frame indicating permission of transitioning to the second sleep mode is received from the communication partner, the control unit 108 transmits an arbitrary frame including an incremented sequence number, for example, a null frame through the transmission unit 102 and the processing unit 106. Then, the control unit 108 stops the operations of the transmission unit 102, the reception unit 104 and the processing unit 106.

Further, in a case in which the host terminal transitions to the second sleep mode in accordance with notification from a communication partner, if a PS-REQ frame is received from the communication partner, the control unit 108 of the proxy terminal 100-2 transmits a PS-ACK frame indicating permission of transitioning to the second sleep mode through the transmission unit 102 and the processing unit 106. Further, after transmission of the PS-ACK frame, the control unit 108 stops the operations of the reception unit 104 and the processing unit 106, and then causes the transmission unit 102 to start the second frame transmission.

### (Returning to normal mode)

If an exchange between a return notification frame relating to notification of stop of the second frame transmission and a return notification response frame that is a response to the return notification frame, which is the second frame exchange, is performed after start of the second frame transmission, the transmission unit 102 of the stop terminal 100-2 stops the second frame transmission. Further, if an exchange between a return notification frame and a return notification response frame, which is the second frame exchange, is performed after stop of the first frame transmission, the transmission unit 102 of the stop terminal 100-2 starts the first frame transmission.

If a temporary return timing arrives in the second sleep mode, the control units 108 of the proxy terminal 100-2 and the stop terminal 100-2 cause the host terminals to return to the normal mode for a temporary return period.

### (Returning pattern A: notification of transitioning to normal mode from proxy terminal)

The control unit 108 of the proxy terminal 100-2 transmits, in a case in which the host terminal returns to the normal mode by itself, a PS-WUP frame through the transmission unit 102 and the processing unit 106 in a temporary return period. Further, if a null frame including an incremented sequence number that is a response to the PS-WUP frame is received from a communication partner, the control unit 108 restarts the operations of the reception unit 104 and the processing unit 106.

In a case in which the host terminal returns to the normal mode in accordance with notification from a communication partner, if a PS-WUP frame is received from the communication partner, the control unit 108 transmits a null frame that is a response to the PS-WUP frame through the transmission unit 102 and the processing unit 106. Further, after transmission of the null frame, the control unit 108 restarts the operations of the transmission unit 102, the reception unit 104 and the processing unit 106.

### (Returning pattern B: notification of return to normal mode from stop terminal)

In a case in which the host terminal transitions to the normal mode by itself, the control unit 108 of the stop terminal 100-2 causes the transmission unit 102 to transmit a return notification frame in a frame transmission period specified on the basis of information obtained by communication with a communication partner. For example, the control unit 108 transmits a PS-WUP frame through the transmission unit 102 and the processing unit 106 in a temporary return period. If a null frame including an incremented sequence number that is a response to the PS-WUP frame is received from the communication partner, the control unit 108 restarts the operations of the transmission unit 102, the reception unit 104 and the processing unit 106.

Further, in a case in which the host terminal returns to the normal mode in accordance with notification from a communication partner, the control unit 108 of the proxy terminal 100-2 causes the transmission unit 102 to stop the second frame transmission in a frame transmission period during which a return notification frame is transmitted from the communication partner. For example, the control unit 108 stops the second frame transmission at a transmission timing of a PS-WUP frame in the temporary return period. Further, if the PS-WUP frame is received from the communication partner, the control unit 108 transmits a null frame that is a response to the PS-WUP frame through the transmission unit 102 and the processing unit 106. After transmission of the null frame, the control unit 108 restarts the operations of the reception unit 104 and the processing unit 106.

Information obtained by communication with a communication partner includes a frame transmission period decided on the basis of communication. Specifically, the frame transmission period decided on the basis of communication corresponds to a frame transmission period (hereinafter, referred to as a proxy stop period) after a predetermined time elapses after a connection process. For example, the proxy stop period arrives every 100-time segments. The proxy stop period may be shared using a frame relating to communication such as a connection process.

### <2-3. Processes of device>

Next, processes of the terminal 100-2 according to this embodiment will be described. Description about processes which are substantially the same as the processes in the first embodiment will not be repeated. Hereinafter, a case in which it is decided in advance that a terminal 100-2A is a proxy terminal and a terminal 100-2B is a stop terminal is considered.

### (Process for transitioning to second sleep mode)

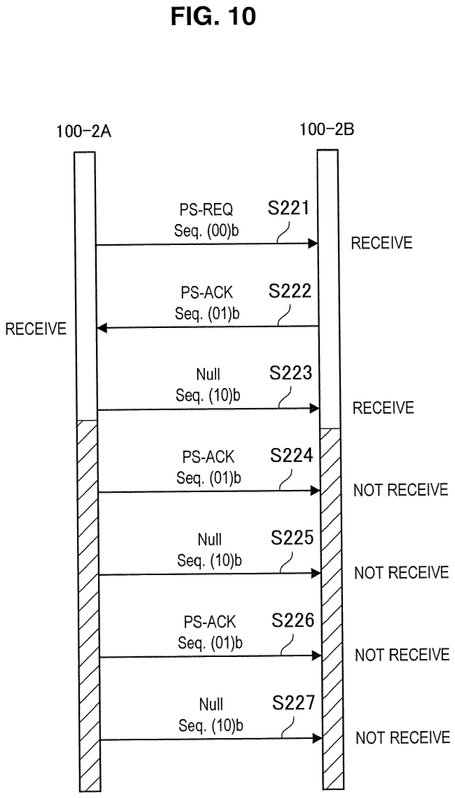

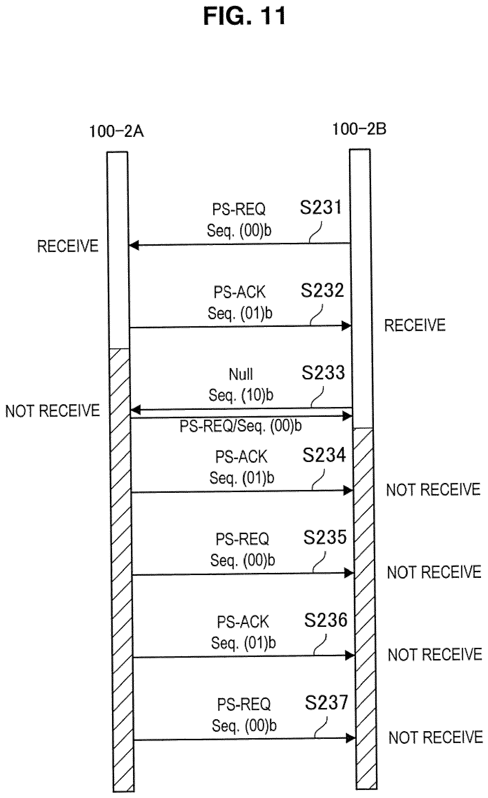

First, a process for transitioning to the second sleep mode of the terminal 100-2 according to this embodiment will be described with reference to FIGS. 10 and 11. FIG. 10 is a sequence diagram schematically illustrating an example of a transitioning process in a case in which transition to the second sleep mode is notified from the proxy terminal 100-2 according to this embodiment, and FIG. 11 is a sequence diagram schematically illustrating an example of a transitioning process in a case in which transition to the second sleep mode is notified from the stop terminal 100-2 according to this embodiment.

### (Transitioning pattern A: notification of transitioning to second sleep mode from proxy terminal)

If transitioning to the second sleep mode is decided, the terminal 100-2A transmits a PS-REQ frame (step S221). For example, a sequence number added to the PS-REQ frame is 0 (00) b.

The terminal 100-2B that receives the PS-REQ frame transmits a PS-ACK frame (step S222). For example, a sequence number added to the PS-ACK frame is 1 (01) b obtained by incrementing the sequence number added to the received PS-REQ frame.

The terminal 100-2A that receives the PS-ACK frame transmits a null frame, and transitions to the second sleep mode (step S223). Specifically, if the PS-ACK frame is received by the reception unit 104, the control unit 108 causes the processing unit 106 to generate a null frame, and the generated null frame is transmitted by the transmission unit 102. Further, the control unit 108 stops the operations of the reception unit 104 and the processing unit 106 after transmission of the null frame, and then, causes the transmission unit 102 to start the second frame transmission. For example, a sequence number added to the null frame is 2 (10) b obtained by incrementing the sequence number added to the received PS-ACK frame.

The terminal 100-2B that receives the null frame transitions to the second sleep mode. Specifically, if a null frame that is a response to the PS-ACK frame is received, the control unit 108 stops the operations of the transmission unit 102, the reception unit 104, and the processing unit 106. The frame that is the response to the PS-ACK frame may be a data frame or another arbitrary frame, instead of the null frame.

After step S224, namely, during the second sleep mode, the terminal 100-2A that is the proxy terminal transmits a frame in each frame transmission period of the host terminal and the terminal 100-2B. Specifically, the transmission unit 102 of the terminal 100-2A continues retransmission of the same frames as the frames of both the terminals immediately before transition.

In this way, it is preferable that the frame transmitted in the frame transmission period of the terminal 100-2B that is the stop terminal be a frame that is the same as the frame that is received by the terminal 100-2A immediately before transitioning to the second sleep mode. For example, a frame for which the terminal 100-2A acts for transmission may be a replication of the frame of the terminal 100-2B immediately before transition.

This is because in a case in which the stop terminal fails in frame reception, there is a possibility that a frame that is substitutively transmitted by the proxy terminal that previously transitions to the second sleep mode and a frame retransmitted by the stop terminal collides with each other. For example, if contents of both the frames are different from each other, there is a possibility that signals relating to the frames collide with each other, and thus, the frames are considered as error frames, for example, P-PDU frames in which cyclic redundancy checks (CRCs) of frames do not match each other by a different terminal. Further, there is a case in which the different terminal determines that a period during which the frame collision occurs is a period during which frame transmission is possible and performs the frame transmission. Thus, as described above, it is preferable that the proxy terminal to substitutively transmit a frame received immediately before transition.

Further, it is preferable that a polarity of a signal relating to a frame for which the terminal 100-2A acts for transmission be the same as a polarity of a signal relating to a frame of the terminal 100-2B immediately before transition.

In addition, during the second sleep mode, since the terminal 100-2A is in a state where the operations of the reception unit 104 and the processing unit 106 are stopped, reception of a frame or increment of a sequence number is not performed. Furthermore, since the operations of the transmission unit 102, the reception unit 104 and the processing unit 106 are stopped in the terminal 100-2B, transmission and reception of a frame, and increment of a sequence number are not performed.

### (Transitioning pattern B: notification of transition to second sleep mode from stop terminal)

If transitioning to the second sleep mode is decided, the terminal 100-2B transmits a PS-REQ frame (step S231). For example, a sequence number added to the PS-REQ frame is 0 (00) b.

The terminal 100-2A that receives the PS-REQ frame transmits a PS-ACK frame, and transitions to the second sleep mode (step S232). Specifically, if the PS-REQ frame is received by the reception unit 104, the control unit 108 causes the processing unit 106 to generate a PS-ACK frame, and the generated PS-ACK frame is transmitted by the transmission unit 102. Further, the control unit 108 stops the operations of the reception unit 104 and the processing unit 106 after transmission of the PS-ACK frame, and then, causes the transmission unit 102 to start the second frame transmission. For example, a sequence number added to the PS-ACK frame is 1 (10) b obtained by incrementing the sequence number added to the received PS-REQ frame.

The terminal 100-2B that receives the PS-ACK frame transmits a null frame, and transitions to the second sleep mode (step S233). Specifically, if the PS-ACK frame is received by the reception unit 104, the control unit 108 causes the processing unit 106 to generate a null frame, and the generated null frame is transmitted by the transmission u nit 102. Further, after transmission of the null frame, the control unit 108 stops the operations of the transmission unit 102, the reception unit 104, and the processing unit 106. For example, a sequence number added to the null frame is 2 (10) b obtained by incrementing the sequence number added to the received PS-ACT frame.

After step S224, namely, during the second sleep mode, the terminal 100-2A that is the proxy terminal transmits a frame in each frame transmission period of the host terminal and the terminal 100-2B. Further, since the terminal 100-2A is in a state where the operations of the reception unit 104 and the processing unit 106 are stopped, reception of a frame and increment of a sequence number are not performed. In addition, since the terminal 100-2B is in a state where the operations of the transmission unit 102, the reception unit 104 and the processing unit 106 are stopped, transmission and reception of a frame, and increment of a sequence number are not performed.

### (Process for returning to normal mode)

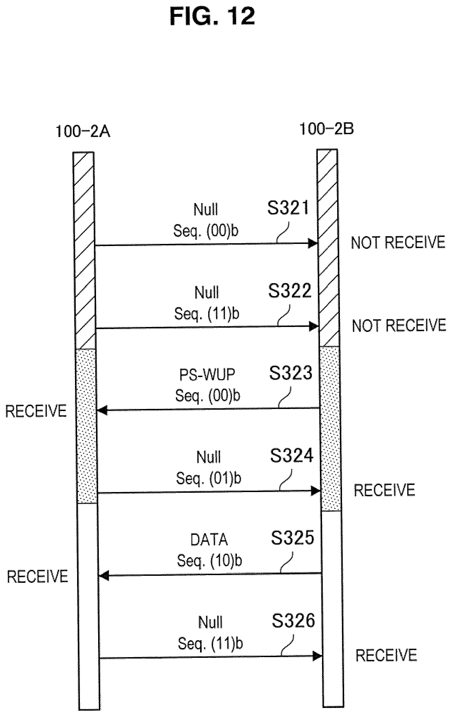

Subsequently, a process for returning to the normal mode of the terminal 100-2 according to this embodiment will be described. FIG. 12 is a sequence diagram schematically illustrating an example of a returning process in a case in which returning to the normal mode is notified from the stop terminal 100-2 according to this embodiment.

### (Returning pattern A: notification of returning to normal mode from proxy terminal)

Since a process of a returning pattern A is substantially the same as the process for returning to the normal mode in the first embodiment except that frame transmission in the sleep mode is performed only by the proxy terminal 100-2A, description thereof will not be repeated.

### (Returning pattern B1: notification of returning to normal mode from stop terminal)

The terminal 100-2A in the second sleep mode transmits a null frame (steps S321 and S322). Specifically, the terminal 100-2A transmits the null frame in frame transmission periods of the host terminal and the terminal 100-2B.

Then, if a temporary return timing arrives, the terminals 100-2A and 100-2B temporarily return to the normal mode.

In a case in which the terminal 100-2B completely returns to the normal mode, the terminal 100-2B transmits a PS-WUP frame in a proxy stop period (step S323). Specifically, in a case in which the terminal 100-2B completely returns to the normal mode, the control unit 108 of the terminal 100-2B causes the processing unit 106 to generate a PS-WUP frame so that the PS-WUP frame is transmitted in the proxy stop period. Further, the generated PS-WUP frame is transmitted in the proxy stop period by the transmission unit 102. For example, a sequence number added to the PS-WUP frame is 0 (00) b. Further, the control unit 108 of the terminal 100-2A stops the second frame transmission by the transmission unit 102 during the proxy stop period.

The terminal 100-2A that receives the PS-WUP frame transmits a null frame, and returns to the normal mode (step S324). For example, a sequence number added to the null frame is 1 (01) b obtained by incrementing the sequence number added to the PS-WUP frame.

The terminal 100-2B that receives the null frame returns to the normal mode and transmits a data frame (step S325). In a case in which there is no data to be transmitted, the terminal 100-2A that receives the data frame transmits a null frame (step S326).

### (Returning pattern B2: notification of returning to normal mode from stop terminal)

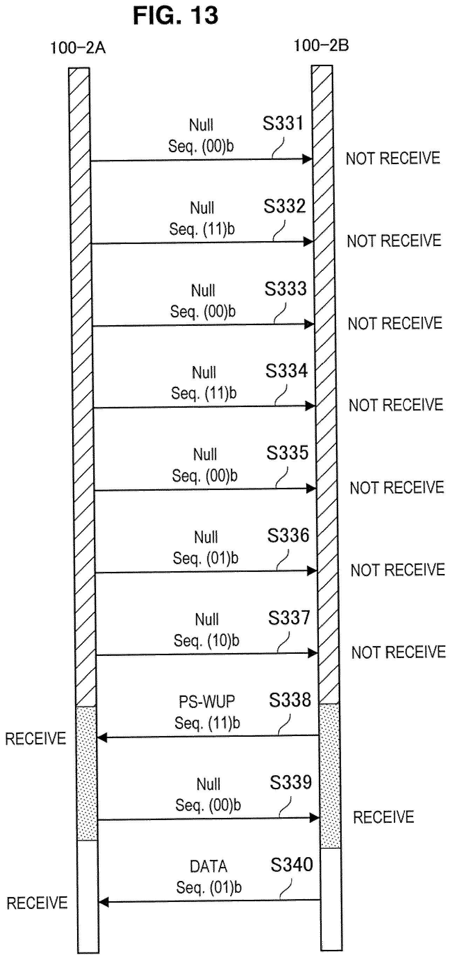

The proxy stop period may be indirectly presented from the proxy terminal 100-2. Specifically, the proxy terminal 100-2 changes a sequence number added to a frame transmitted after the start of the second frame transmission in accordance with a predetermined pattern, and the stop terminal 100-2 estimates the proxy stop period on the basis of the change of the sequence number in accordance with the predetermined pattern. Further, a process of a returning pattern B2 will be described in detail with reference to FIG. 13. FIG. 13 is a sequence diagram schematically illustrating another example of a returning process in a case in which returning to the normal mode is notified from the stop terminal 100-2 according to this embodiment.

For example, the terminal 100-2A in the second sleep mode transmits a null frame including a sequence number that is changed in accordance with a predetermined pattern (steps S331 to S337). Specifically, the terminal 100-2A changes sequence numbers added to null frames transmitted in frame transmission periods of the host terminal and the terminal 100-2B to be 0 (00) b, 3 (11) b, 0 (00) b, 3 (11) b, 0 (00) b, 1 (01) b, and 2 (10) b.

Further, when transitioning to the second sleep mode, the terminal 100-2B continues the operation of the reception unit 104 until the change in accordance with the predetermined pattern is confirmed. Specifically, after transitioning to the second sleep mode, the terminal 100-2B stops the operation of the reception unit 104 after the change in accordance with the predetermined pattern is performed by one cycle.

Next, after termination of the predetermined pattern, the terminal 100-2A and the terminal 100-2B temporarily return to the normal mode. The terminal 100-2 may temporarily return to the normal mode every termination of the predetermined pattern, or may temporarily return to the normal mode at some timings among timings when the predetermined pattern is terminated. Further, some timings may be determined using a timer.

Then, the terminal 100-2A stops frame transmission in a frame transmission period between termination and start of the predetermined pattern, and the terminal 100-2B transmits a PS-WUP frame (step S338). Specifically, frame transmission in the next frame transmission period of 2 (10) b at the end of the predetermined pattern is stopped. Further, in the frame transmission period, an SP-WUP frame is transmitted from the terminal 100-2B. For example, a sequence number added to the PS-WUP frame is 3 (11) b.

The terminal 100-2A that receives the PS-WUP frame transmits a null frame, and returns to the normal mode (step S339), and the terminal 100-2B that receives the null frame returns to the normal mode and transmits a data frame (step S340).

In this way, according to the second embodiment of the present disclosure, the terminal 100-2 performs the first frame transmission using intra-body communication in a frame transmission period of the host terminal that is decided in advance regardless of the presence or absence of data to be transmitted while communication is continued. Further, the terminal 100-2 that is a proxy terminal performs the second frame transmission in a frame transmission period of a communication partner, in addition to the first frame transmission. Further, the terminal 100-2 that is a stop terminal stops the first frame transmission while the second frame transmission is being performed in the frame transmission period of the host terminal by the communication partner. Thus, as frame transmission of the stop terminal 100-2 is substitutively performed by the proxy terminal 100-2, it is possible to further reduce power consumption in the sleep mode of the stop terminal 100-2 compared with that in the first sleep mode, while maintaining a communication state.

Further, if the first frame exchange is performed, the proxy terminal 100-2 starts the second frame transmission, and the stop terminal 1002 stops the first frame transmission. Thus, transitioning to the second sleep mode is clearly shown, and thus, it is possible to prevent the occurrence of a situation where mismatching occurs between terminals with respect to transitioning to a sleep mode.

The first frame exchange includes an exchange between a transition notification frame relating to notification of the start of the second frame transmission and a transition notification response frame that is a response to the transition notification frame. Further, if an exchange between the transition notification response frame and a frame that is a response to the transition notification response frame is performed, the stop terminal 100-2 stops the first frame transmission. Thus, transitioning to the second sleep mode is notified by a dedicated frame, and thus, it is possible to easily determine the transitioning to the second sleep mode. As a result, it is possible to simplify the process of transitioning to the second sleep mode.

Further, on the basis of a second frame exchange that is performed after the start of the second frame transmission, namely, after stop of the first frame transmission, the proxy terminal 100-2 stops the second frame transmission, and the stop terminal 100-2 starts the first frame transmission. Thus, returning to the normal mode is clearly shown, it is possible to prevent the occurrence of a situation in which mismatching occurs between terminals with respect to transitioning to the normal mode.

Further, the second frame exchange includes an exchange between a return notification frame relating to notification of stop of the second frame transmission and a return notification response frame that is a response to the return notification frame. Thus, returning to the normal mode is notified by a dedicated frame, it is possible to easily determine the returning to the normal mode. As a result, it is possible to simplify the process for returning to the normal mode.

In addition, the proxy terminal 100-2 does not perform the second frame transmission in a frame transmission period during which a return notification frame is transmitted from a communication partner, and the stop terminal 100-2 transmits a return notification frame in a frame transmission period specified on the basis of information obtained by communication with the communication partner. Thus, a collision between the return notification frame transmitted by the stop terminal 100-2 and a frame relating to the second frame transmission of the proxy terminal 100-2 is prevented, and thus, the return notification frame is correctly received. As a result, it is possible to perform returning to the normal mode on the basis of a desire of the stop terminal 100-2.

The proxy terminal 100-2 stops frame reception when the second frame transmission is started, and the stop terminal 100-2 stops frame reception when the first frame is stopped. Thus, in the proxy terminal 100-2, while frame transmission is substitutively performed, frame reception is stopped, and thus, it is possible to prevent an increase in power consumption. Further, in the stop terminal 100-2, frame reception in addition to frame transmission is stopped, and thus, it is possible to further reduce power consumption.

### <2-4. Modification example>

Hereinbefore, the second embodiment of the present disclosure has been described. The present embodiment is not limited to the above-described example. Hereinafter, first to third modification examples of this embodiment will be described.

### (First modification example)

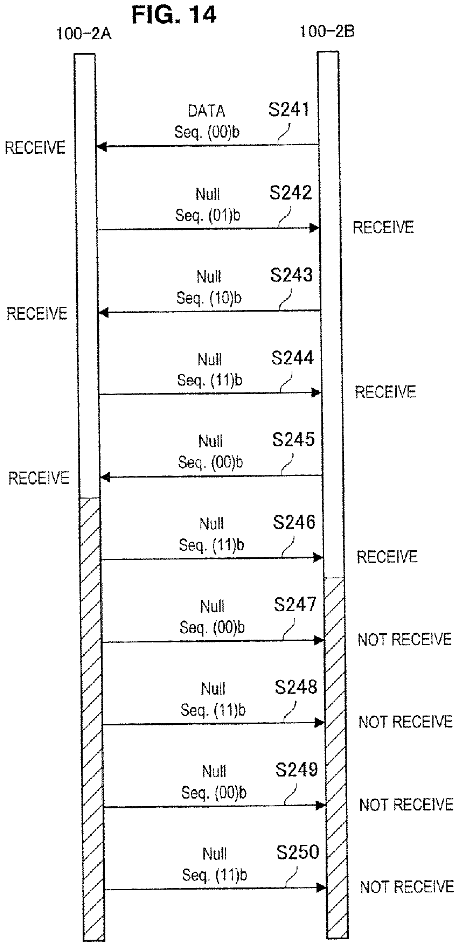

As a first modification example of this embodiment, a frame exchange that is a trigger of transitioning to the second sleep mode, which is the first frame exchange, may be a consecutive exchange of a null frame. Specifically, if a null frame is consecutively exchanged over a predetermined number of times, the proxy terminal 100-2 starts the second frame transmission and stops the operations of the reception unit 104 and the processing unit 106. Further, if a null frame is consecutively exchanged over a predetermined number of times, the stop terminal 100-2 stops the operations of the transmission unit 102, the reception unit 104 and the processing unit 106. Further, processes of this modification example will be described in detail with reference to FIG. 14. FIG. 14 is a sequence diagram schematically illustrating an example of a process for transitioning to the second sleep mode in terminals 100-2 according to the first modification example of this embodiment. Description about processes which are substantially the same as the processes in the first or second embodiment will not be repeated.

In a case in which there is data to be transmitted, a terminal 100-2B transmits a data frame (step S241), and a terminal 100-2A that receives the data frame transmits a null frame in a case in which there is no data frame to be transmitted (step S242).

In steps S242 to S245, since there is no data frame to be transmitted in both the terminals 100-2A and 100-2B, as shown in FIG. 14, transmission and reception of the null frame are consecutively performed.

Here, the terminals 100-2A and 100-2B count the number of times of transmission and reception of the null frame, and if the number of times reaches a predetermined number of times, the terminals 100-2A and 100-2B transition to the second sleep mode. The predetermined number of times in the terminal 100-2B that is a stop terminal is larger than the predetermined number of times in the terminal 100-2A that is a proxy terminal.

For example, a case in which the predetermined number of times in the terminal 100-2A is 4, and the predetermined number of times in the terminal 100-2B is 5 will be described. As shown in FIG. 14, with respect to the terminal 100-2A, null frames are exchanged, that is, are transmitted or received four consecutive times from transmission of a null frame in step S242 to transmission of a null frame in step S245. Thus, the terminal 100-2A transitions to the second sleep mode after transmission of the null frame in step S245.

Further, as shown in FIG. 14, with respect to the terminal 100-2B, null frames are transmitted or received five consecutive times from reception of a null frame in step S242 to reception of a null frame in step S246. Thus, the terminal 100-2B transitions to the second sleep mode after reception of the null frame in step S246.

According to the first modification example of this embodiment as described above, the first frame exchange includes a consecutive exchange of a frame that is transmitted in a case in which there is no data to be transmitted. Thus, as the terminal 100-1 transitions to the second sleep mode using a frame that is prepared in an existing intra-body communication standard, and thus, it is possible to cut down the degree of improvement in a terminal that is operated according to the existing intra-body communication standard, to thereby reduce cost required for application of the second sleep mode to the existing terminal.

### (Second modification example)

As a second modification example of this embodiment, transitioning to the second sleep mode may be performed on the basis of the arrival of a second transition timing, and returning to the normal mode may be performed on the basis of the arrival of a second return timing. Specifically, if the second transition timing arrives, the control unit 108 of the proxy terminal 100-2 causes the transmission unit 102 to start second frame transmission and stops the operations of the reception unit 104 and the processing unit 106. Further, if the second transition timing arrives, the control unit 108 of the stop terminal 100-2 stops the operations of the transmission unit 102, the reception unit 104, and the processing unit 106.

Further, if the second return timing arrives, the control unit 108 of the proxy terminal 100-2 causes the transmission unit 102 to stop the second frame transmission and start the first frame transmission and starts the operations of the reception unit 104 and the processing unit 106. Further, if the second return timing arrives, the control unit 108 of the stop terminal 100-2 causes the transmission unit 102 to start the first frame transmission and starts the operations of the reception unit 104 and the processing unit 106. Since details about the processes of this modification example are substantially the same as the processes in the second modification example in the first embodiment except that a sleep mode is different, description thereof will not be repeated.

As described above, according to the second modification example of this embodiment, if a first time that is decided in advance arrives, the proxy terminal 100-2 starts the second frame transmission, and the stop terminal 100-2 stops the first frame transmission. Further, after the start of the second frame transmission, that is, after stop of the first frame transmission, if a second time that is decided in advance arrives, the proxy terminal 100-1 stops the second frame transmission, and the stop terminal 100-2 starts the first frame transmission. Thus, modes are switched without a special process such as a frame exchange, and thus, it is possible to prevent complication in processes due to the addition of the second sleep mode.

### (Third modification example)

As a third modification example of this embodiment, the proxy terminal 100-2 may return to the normal mode on the basis of an exchange between a series of frames transmitted whenever a temporary return timing arrives and a frame that is a response to the series of frames. Further, the stop terminal 100-2 may return to the normal mode on the basis of reception of the series of frames.

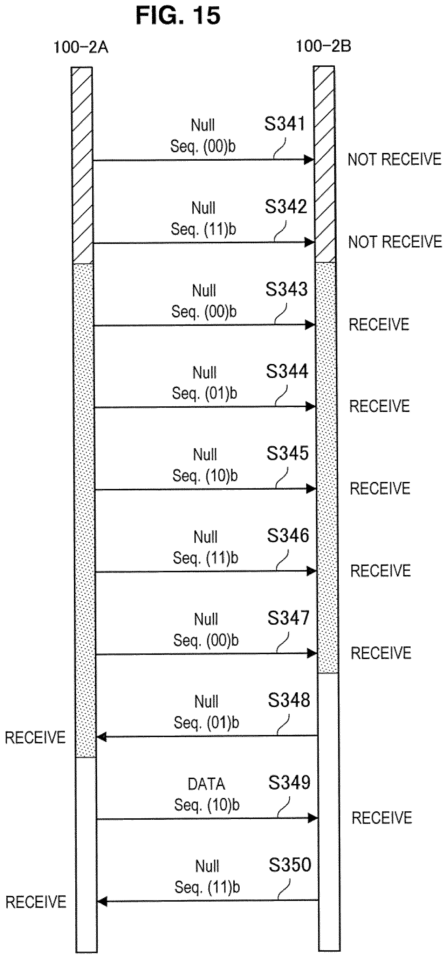

Specifically, if the exchange between the series of frames transmitted whenever the temporary return timing arrives after the start of the second frame transmission and the frame based on the series of frames is performed, which is a second frame exchange, the proxy terminal 100-2 stops the second frame transmission. The proxy terminal 100-2 does not perform the second frame transmission in a frame transmission period during which the frame that is the response to the series of frames is transmitted. In addition, if a series of frames are received from the proxy terminal 100-2 after stop of the first frame transmission, the stop terminal 100-2 starts the first frame. Processes of this modification example will be described in detail with reference to FIG. 15. FIG. 15 is a sequence diagram schematically illustrating an example of a process for returning to a normal mode in terminals 100-2 according to the third modification example of this embodiment. Description about processes which are substantially the same as in the first or second embodiment will not be repeated.

The terminal 100-2A in the second sleep mode transmits a null frame (steps S341 and S342), and if a temporary return timing arrives, the terminals 100-2A and 100-2B temporarily return to the normal mode. The terminal 100-2B maintains the stopped state of the operations of the transmission unit 102 and the processing unit 106, and starts only the operation of the reception unit 104.

Then, the terminal 100-2A that is a proxy terminal transmits a series of frames in a temporary return period (steps S343 to S347). Specifically, the terminal 100-2A transmits a series of frames including each of sequence numbers updated in accordance with a pattern that is decided in advance in the temporary return period. For example, the terminal 100-2A changes sequence numbers added to null frames transmitted in frame transmission periods of the host terminal and the terminal 100-2B to be 0 (00) b, 1 (01) b, 2 (10) b, 3 (11) b, and 0 (00) b.

Then, if the series of frames are received in the temporary return period, the terminal 100-2B that is a stop terminal returns to the normal mode, and transmits a null frame that is a response to the series of frames (step S348). For example, a sequence number added to the null frame is 1 (01) b obtained by incrementing a sequence number added to a null frame that is the end of the received series of frames. Further, the proxy terminal 100-2A does not perform the second frame transmission in a frame transmission period during which the null frame is transmitted after transmission of the series of frames.

The stop terminal 100-2B may determine to return to the normal mode on the basis of reception of some of the series of frames. For example, the stop terminal 100-2B estimates the entirety of the series of frames from some of the series of frames, and determines whether a sequence number is changed in accordance with a predetermined pattern with respect to the estimated series of frames.

The terminal 100-2A that receives the null frame that is the response to the series of frames returns to the normal mode, and transmits a data frame (step S349). In a case in which there is no data to be transmitted, the terminal 100-2B that receives the data frame transmits a null frame (step S350).

As described above, according to the third modification example of this embodiment, the proxy terminal 100-2 stops the second frame transmission on the basis of an exchange between a series of frames transmitted whenever a third time that is decided in advance after start of the second frame transmission and a frame that is a response to the series of frames. Further, the stop terminal 100-2 starts the first frame transmission on the basis of reception of the series of frames. Thus, compared with a case in which mode switching is performed on the basis of a single frame, resistance to reception failure of frames is enhanced, to thereby enhance certainty of a return process.

Further, each of the series of frames includes frame exchange information updated in accordance with a pattern that is decided in advance. Thus, the terminal 100-2 returns to the normal mode using information of a frame that is prepared in an existing intra-body communication standard, and thus, it is possible to cut down the degree of improvement in a terminal that is operated according to the existing intra-body communication standard, thereby reducing cost required for application of the second sleep mode to the existing terminal.

### <4. Third embodiment (switching between sleep modes)>

Hereinbefore, the terminal 100-2 according to the second embodiment of the present disclosure has been described. Subsequently, a terminal 100-3 according to a third embodiment of the present disclosure will be described. In the third embodiment, a sleep mode is switched to any one of a first sleep mode and a second sleep mode.

### <4-1. Configuration of device>

A functional configuration of the terminal 100-3 according to the second embodiment of the present disclosure is substantially the same as the functional configuration in the first embodiment, but the functions of the control unit 108 are partially different. Description about substantially the same functions as the functions in the first or second embodiment will not be repeated.

The control unit 108 selects any one of the first sleep mode and the second sleep mode. Specifically, the control units 108 of a terminal 100-3 that is neither a proxy terminal nor a stop terminal and the proxy terminal 100-3 switch frame transmission to be performed by the transmission unit 102 in a state where frame reception is stopped to only the first frame transmission or to both the first frame transmission and the second frame transmission. Further, the control unit 108 of the stop terminal 100-3 performs switching between the presence and absence of the first frame transmission in a state where frame reception is stopped.

More specifically, if a temporary return timing arrives a number of times that is decided in advance, the control unit 108 switches frame transmission to be selected. For example, if the temporary return timing arrives the number of times that is decided in advance in a state where the terminal 100-3 is in the first sleep mode, the control unit 108 switches the sleep mode to the second sleep mode. In a case in which returning to the normal mode occurs, the control unit 108 may initialize counting of the number of times of the arrival of the temporary return timing or may maintain the counting.

In the above description, an example in which the sleep mode is switched when the number of times of arrival of a temporary return timing reaches a number of times that is decided in advance has been described, but the sleep mode may be switched when a time length in the sleep mode reaches a time length that is decided in advance. For example, in a case in which a time elapsed after transitioning to any one sleep mode reaches a time length that is decided in advance, the control unit 108 may switch a sleep mode after the next temporary return timing to the other sleep mode.

Further, a period during which sleep is continued may be changed in accordance with the kinds of sleep modes. For example, the number of times that is decided in advance, or the predetermined time length with respect to the second sleep mode may be set to be larger or longer than that of the first sleep mode.

### <4-2. Processes of device>

Since processes of the terminal 100-3 according to this embodiment are substantially the same as the processes in the first or second embodiment except for a sleep mode switching process, description thereof will not be repeated.

As described above, according to the third embodiment of the present disclosure, the proxy terminal 100-3 switches frame transmission in a state where frame reception is stopped to the first frame transmission of the host device during a frame transmission period, or to both the first frame transmission and the second frame transmission of a communication partner during the frame transmission period. Further, the stop terminal 100-3 performs switching between the presence and absence of the first frame transmission in a state in which the frame reception is stopped. Thus, switching to a sleep mode can be performed in accordance with situations of the host terminal and the communication partner, and thus, it is possible to more effectively reduce power consumption.

Further, if the third time arrives a number of times that is decided in advance, the terminal 100-3 switches the frame transmission. Thus, the sleep mode can be periodically performed, and thus, it is possible to prevent the occurrence of a non-preferable situation as one sleep mode continues longer than the other sleep mode. For example, such a situation may include a situation in which the second sleep mode continues for a long period of time and power consumption of one terminal 100-3 is larger than the power consumption of the other terminal 100-3.

### <4-3. Modification example>

Hereinbefore, the third embodiment of the present disclosure has been described. This embodiment is not limited to the above-described examples. Hereinafter, a modification example of this embodiment will be described.

As a modification example of this embodiment, the terminal 100-3 may switch frame transmission on the basis of a frame communicated in a temporary return period. Specifically, in a case in which a sleep mode switching request occurs in the host terminal, the control unit 108 transmits a specific frame such as a PS-REQ frame through the processing unit 106 and the transmission unit 102 during the temporary return period. Further, if a frame such as a PS-ACK frame that is a response to the specific frame is received, the control unit 108 performs sleep mode switching. Information indicating a sleep mode of a switching target may be included in the specific frame.

As described above, according to the modification example of this embodiment, the terminal 100-3 performs switching of frame transmission to be selected on the basis of a frame communicated in the temporary return period. Thus, the sleep mode switching is clearly notified, and thus, it is possible to select a sleep mode suitable for a situation of the terminal 100-3. Thus, it is possible to more effectively reduce power consumption.

### <5. Hardware configuration of intra-body communication device according to embodiment of present disclosure>

Hereinbefore, the intra-body communication device 100 according to each embodiment of the present disclosure has been described. Processes of the above-described intra-body communication device are realized in cooperation with software and hardware of the intra-body communication device 100 to be described hereinafter.

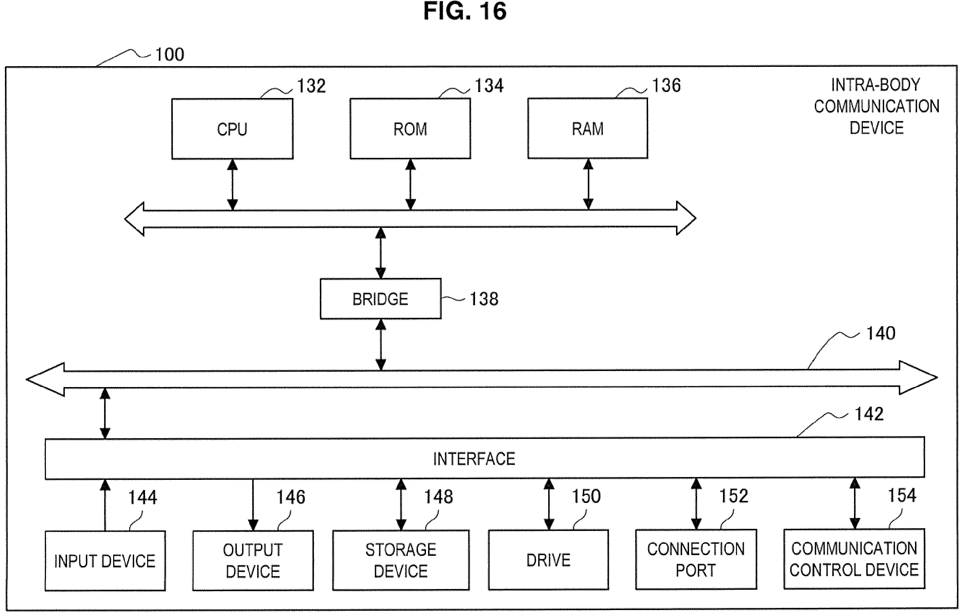

FIG. 16 is a diagram illustrating a hardware configuration of the intra-body communication device 100 according to an embodiment of the present disclosure. As shown in FIG. 16, the intra-body communication device 100 includes a central processing unit (CPU) 132, a read only memory (ROM) 134, a random access memory (RAM) 136, a bridge 138, a bus 140, an interface 142, an input device 144, an output device 146, a storage device 148, a drive 150, a connection port 152, and a communication control device 154.

The CPU 132 functions as an arithmetic processing unit, and realizes a part of operations of the processing unit 106 and the control unit 108 in the intra-body communication device 100 in cooperation with various programs. Further, the CPU 132 may be a microprocessor. The ROM 134 stores a program used by the CPU 132, operation parameters, or the like. The RAM 136 temporarily stores a program used in the execution of the CPU 132, parameters that are appropriately changed in the execution, or the like. A part of a storage in the intra-body communication device 100 is realized by the ROM 134 and the RAM 136. The CPU 132, the ROM 134, and the RAM 136 are connected to each other by an internal bus formed by a CPU bus or the like.

The input device 144 is configured by an input unit that inputs information from a user, such as a mouse, a keyboard, a touch panel, buttons, a microphone, a switch and a lever, an input control circuit that generates an input signal on the basis of an input from a user and outputs the input signal to the CPU 132, and the like. A user of the intra-body communication device 100 operates the input device 144 to input a variety of data to the intra-body communication device 100 or to indicate an operation to be processed.

The output device 146 performs output to devices such as a liquid crystal display (LCD) device, an organic light emitting diode (OLED) device, and a lamp. Further, the output device 146 may perform sound output through a speaker or a headphone.

The storage device 148 is a device for data storage. The storage device 148 may include a storage medium, a recording device that records data on the storage medium, a reading device that reads data from the storage medium, a deletion device that deletes data stored on the storage medium, and the like. The storage device 148 stores a program to be executed by the CPU 132, or a variety of data.

The drive 150 functions as a reader and a writer for a storage medium, and is provided in the intra-body communication device 100 or is externally attached. The drive 150 reads information recorded on a removable storage medium, which is provided in the intra-body communication device 100, such as a magnetic disc, an optical disc, a magneto-optical disc, or a semiconductor memory, and outputs the result to the RAM 134. Further, the drive 150 may write information on the removable storage medium.

The connection port 152 is a bus for being connected to an external information processing device or a peripheral device of the intra-body communication device 100, for example. Further, the connection port 152 may be a universal serial bus (USB).

The communication control device 154 is a communication interface configured by a communication device for performing intra-body communication, as an example of the transmission unit 102, the reception unit 104, and the processing unit 106 of the intra-body communication device 100. Further, the communication control device 154 may be a communication device corresponding to a wireless local area network (LAN), a communication device corresponding to a long term evolution (LTE), or a device corresponding to wire communication for performing communication in a wired manner.

### <6. Conclusion>

As described above, according to the first embodiment of the present disclosure, since frame reception is stopped while continuing frame transmission, it is possible to reduce power consumption of at least one of the host device or a communication partner while maintaining communication connection of intra-body communication.

Further, according to the second embodiment of the present disclosure, since frame transmission of the stop terminal 100-2 is substitutively performed by the proxy terminal 100-2, it is possible to further reduce power consumption in a sleep mode of the stop terminal 100-2 compared with that in the first sleep mode, while maintaining a communication state.

In addition, according to the third embodiment of the present disclosure, since switching into the sleep mode is performed based on situations of the host terminal and the communication partner, it is possible to more effectively reduce power consumption.

The preferred embodiment(s) of the present disclosure has/have been described above with reference to the accompanying drawings, whilst the present disclosure is not limited to the above examples. A person skilled in the art may find various alterations and modifications within the scope of the appended claims, and it should be understood that they will naturally come under the technical scope of the present disclosure.

For example, in the above-described embodiment, a specific frame transmitted during a temporary return period such as a PS-WUP frame is used for notification of release of a sleep mode, but the present technique is not limited to such an example. For example, the specific frame transmitted during the temporary return period may be used for notification of continuation of the sleep mode. Further, in this case, a pattern of change in a sequence number in the third modification example of the second embodiment may be different between the notification of the release of the sleep mode and the notification of the continuation of the sleep mode. For example, in a case in which the continuation of the sleep mode is notified, the sequence number is changed to be 0 (00) b, 3 (11) b, 0 (00) b, and 3 (11)b.

Further, in the above-described embodiment, an example in which transition to a sleep mode and returning to a normal mode are notified using only intra-body communication has been described, but the notification may be performed using communication based on a different communication method. For example, the terminal 100 may perform the notification using communication based on Bluetooth (registered trademark), Bluetooth Low Energy (BLE), Wi-Fi (registered trademark), or the like.

Further, the effects described in this specification are merely illustrative or exemplified effects, and are not limitative. That is, with or in the place of the above effects, the technology according to the present disclosure may achieve other effects that are clear to those skilled in the art from the description of this specification.

### Reference Signs List

- 100: intra-body communication device, terminal
- 102: transmission unit
- 104: reception unit
- 106: processing unit
- 108: control unit

## Claims

1. An intra-body communication device (100-2B) comprising:
a transmission unit (102) configured to perform, in a normal mode of operation, first frame transmission using intra-body communication in a frame transmission period of the intra-body communication device (100-2B) that is decided in advance, wherein the first frame transmission is performed regardless of presence or absence of data to be transmitted to maintain the intra-body communication connection,
wherein the transmission unit (102) is configured to stop, in a sleep mode, the first frame transmission while second frame transmission is being performed by a communication partner (100-2A) in the frame transmission period of the intra-body communication device (100-2B) in order to reduce the power consumption of the intra-body communication device (100-2B).

2. The intra-body communication device (100-2B) according to claim 1,
the transmission unit (102) is configured to stop the first frame transmission after a first frame exchange is performed.

3. The intra-body communication device (100-2B) according to claim 2,
wherein the first frame exchange includes an exchange between a transition notification frame relating to notification of start of the second frame transmission and a transition notification response frame that is a response to the transition notification frame, or an exchange between the transition notification response frame and a frame that is a response to the transition notification response frame, or a consecutive exchange of a frame that is transmitted in a case in which there is no data to be transmitted.

4. The intra-body communication device (100-2B) according to any preceding claim, wherein the transmission unit (102) is configured to stop the first frame transmission after a first time that is decided in advance arrives.

5. The intra-body communication device (100-2B) according to claims 2 or 3,
wherein the transmission unit (102) is configured to start the first frame transmission or to continue stop of the first frame transmission on the basis of a second frame exchange that is performed after the stop of the first frame transmission.

6. The intra-body communication device (100-2B) according to claim 5,
wherein the second frame exchange includes an exchange between a return notification frame relating to notification of stop of the second frame transmission and a return notification response frame that is a response to the return notification frame, in particular wherein the transmission unit (102) is configured to transmit the return notification frame in the frame transmission period that is specified on the basis of information obtained by communication with the communication partner.

7. The intra-body communication device (100-2B) according to any preceding claim,
wherein the transmission unit (102) is configured to start the first frame transmission or to continue stop of the first frame transmission on the basis of reception of a series of frames after the stop of the first frame transmission, in particular wherein a frame that is transmitted by the transmission unit (102) includes frame exchange information to be updated in transmission of a frame based on a received frame, and
each of the series of frames includes the frame exchange information updated in accordance with a pattern that is decided in advance.

8. The intra-body communication device (100-2B) according to claim 4, wherein the transmission unit (102) is configured to start the first frame transmission after a second time that is decided in advance arrives, after stop of the first frame transmission.

9. The intra-body communication device (100-2B) according to any preceding claim, further comprising:
a reception unit (104) configured to receive a frame using intra-body communication; and
a control unit (108) configured to stop frame reception of the reception unit (104) when the first frame transmission is stopped by the transmission unit (102), and further configured to perform switching between presence and absence of the first frame transmission in a state in which the frame reception of the reception unit (104) is stopped.

10. An intra-body communication method comprising:
performing, in a normal mode of operation by a transmission unit (102) of an intra-body communication device (100-2B), first frame transmission using intra-body communication in a frame transmission period of the intra-body communication device (100-2B) that is decided in advance, wherein the first frame transmission is performed regardless of presence or absence of data to be transmitted to maintain the intra-body communication connection; and
stopping, in a sleep mode by the transmission unit (102), the first frame transmission while second frame transmission is being performed by a communication partner (100-2A) in the frame transmission period of the intra-body communication device (100-2B) in order to reduce the power consumption of the intra-body communication device (100-2B).

11. A computer program comprising program code means causing an intra-body communication device (100-2B) according to claim 1 to execute the steps of the method defined in claim 10.

## Patentansprüche

1. Intrakörperkommunikationsvorrichtung (100-2B), die Folgendes umfasst:
eine Übertragungseinheit (102), die dazu ausgelegt ist, eine erste Frameübertragung unter Verwendung einer Intrakörperkommunikation in einer Frameübertragungsperiode der Intrakörperkommunikationsvorrichtung (100-2B), die vorab beschlossen wird, in einem normalen Betriebsmodus durchzuführen, wobei die erste Frameübertragung unabhängig vom Vorhandensein oder Fehlen von Daten, die zu übertragen sind, durchgeführt wird, um die Intrakörperkommunikationsverbindung aufrechtzuerhalten, wobei die Übertragungseinheit (102) dazu ausgelegt ist, die erste Frameübertragung in einem Ruhemodus zu stoppen, während eine zweite Frameübertragung von einem Kommunikationspartner (100-2A) in der Frameübertragungsperiode der Intrakörperkommunikationsvorrichtung (100-2B) durchgeführt wird, um den Stromverbrauch der Intrakörperkommunikationsvorrichtung (100-2B) zu reduzieren.

2. Intrakörperkommunikationsvorrichtung (100-2B) nach Anspruch 1, wobei die Übertragungseinheit (102) dazu ausgelegt ist, die erste Frameübertragung zu stoppen, nachdem ein erster Frameaustausch durchgeführt wurde.

3. Intrakörperkommunikationsvorrichtung (100-2B) nach Anspruch 2,
wobei der erste Frameaustausch einen Austausch zwischen einem Übergangshinweisframe, der einen Hinweis auf den Start der zweiten Frameübertragung betrifft, und einem Übergangshinweisantwortframe, der eine Antwort auf den Übergangshinweisframe ist, oder einen Austausch zwischen dem Übergangshinweisantwortframe und einem Frame, der eine Antwort auf den Übergangshinweisantwortframe ist, oder einen fortlaufenden Austausch eines Frames, der in einem Fall, in dem keine Daten zu übertragen sind, übertragen wird, beinhaltet.

4. Intrakörperkommunikationsvorrichtung (100-2B) nach einem der vorhergehenden Ansprüche, wobei die Übertragungseinheit (102) dazu ausgelegt ist, die erste Frameübertragung zu stoppen, nachdem eine erste Zeit, die vorab beschlossen wird, erreicht ist.

5. Intrakörperkommunikationsvorrichtung (100-2B) nach Anspruch 2 oder 3,
wobei die Übertragungseinheit (102) dazu ausgelegt ist, auf Basis eines zweiten Frameaustausches, der nach dem Stoppen der ersten Frameübertragung durchgeführt wird, die erste Frameübertragung zu starten oder die erste Frameübertragung weiter zu stoppen.

6. Intrakörperkommunikationsvorrichtung (100-2B) nach Anspruch 5,
wobei der zweite Frameaustausch einen Austausch zwischen einem Rückkehrhinweisframe, der einen Hinweis auf das Stoppen der zweiten Frameübertragung betrifft, und einem Rückkehrhinweisantwortframe, der eine Antwort auf den Rückkehrhinweisframe ist, beinhaltet, insbesondere wobei die Übertragungseinheit (102) dazu ausgelegt ist, den Rückkehrhinweisframe in der Frameübertragungsperiode zu übertragen, die auf Basis von Informationen, die durch eine Kommunikation mit dem Kommunikationspartner erhalten werden, spezifiziert ist.

7. Intrakörperkommunikationsvorrichtung (100-2B) nach einem der vorhergehenden Ansprüche,
wobei die Übertragungseinheit (102) dazu ausgelegt ist, auf Basis des Empfangs einer Reihe von Frames nach dem Stoppen der ersten Frameübertragung die erste Frameübertragung zu starten oder die erste Frameübertragung weiter zu stoppen, insbesondere wobei ein Frame, der von der Übertragungseinheit (102) übertragen wird, Frameaustauschinformationen beinhaltet, die bei der Übertragung eines Frames auf Basis eines empfangenen Frames zu aktualisieren sind, und
jeder der Reihe von Frames die Frameaustauschinformationen beinhaltet, die gemäß einem Muster, das vorab beschlossen wird, aktualisiert werden.

8. Intrakörperkommunikationsvorrichtung (100-2B) nach Anspruch 4,
wobei die Übertragungseinheit (102) dazu ausgelegt ist, die erste Frameübertragung zu starten, nachdem eine zweite Zeit, die vorab beschlossen wird, erreicht ist, nachdem die erste Frameübertragung gestoppt wurde.

9. Intrakörperkommunikationsvorrichtung (100-2B) nach einem der vorhergehenden Ansprüche, die ferner Folgendes umfasst:
eine Empfangseinheit (104), die dazu ausgelegt ist, unter Verwendung einer Intrakörperkommunikation einen Frame zu empfangen; und
eine Steuereinheit (108), die dazu ausgelegt ist, einen Frameempfang der Empfangseinheit (104) zu stoppen, wenn die erste Frameübertragung von der Übertragungseinheit (102) gestoppt wird, und ferner dazu ausgelegt, in einem Zustand, in dem der Frameempfang der Empfangseinheit (104) gestoppt ist, zwischen dem Vorhandensein und dem Fehlen der ersten Frameübertragung eine Umschaltung durchzuführen.

10. Intrakörperkommunikationsverfahren, das Folgendes umfasst:
Durchführen einer ersten Frameübertragung unter Verwendung einer Intrakörperkommunikation in einer ersten Übertragungsperiode einer Intrakörperkommunikationsvorrichtung (100-2B), die vorab beschlossen wird, in einem normalen Betriebsmodus durch eine Übertragungseinheit (102) der Intrakörperkommunikationsvorrichtung (100-2B), wobei die erste Frameübertragung unabhängig vom Vorhandensein oder Fehlen von Daten, die zu übertragen sind, durchgeführt wird, um die Intrakörperkommunikationsverbindung aufrechtzuerhalten; und
Stoppen der ersten Frameübertragung in einem Ruhemodus durch die Übertragungseinheit (102), während eine zweite Frameübertragung von einem Kommunikationspartner (100-2A) in der Frameübertragungsperiode der Intrakörperkommunikationsvorrichtung (100-2B) durchgeführt wird, um den Stromverbrauch der Intrakörperkommunikationsvorrichtung (100-2B) zu reduzieren.

11. Computerprogramm, das Programmcodemittel umfasst, die eine Intrakörperkommunikationsvorrichtung (100-2B) nach Anspruch 1 veranlassen, die in Anspruch 10 definierten Schritte des Verfahrens auszuführen.

## Revendications

1. Dispositif de communication intracorporelle (100-2B) comprenant :
une unité de transmission (102) configurée pour effectuer, dans un mode de fonctionnement normal, une première transmission de trame en utilisant une communication intracorporelle dans une période de transmission de trame du dispositif de communication intracorporelle (100-2B) qui est décidée à l'avance, dans lequel la première transmission de trame est effectuée indépendamment de la présence ou de l'absence de données à transmettre pour maintenir la connexion de communication intracorporelle,
dans lequel l'unité de transmission (102) est configurée pour arrêter, dans un mode veille, la première transmission de trame tandis que la seconde transmission de trame est effectuée par un partenaire de communication (100-2A) dans la période de transmission de trame du dispositif de communication intracorporelle (100-2B) afin de réduire la consommation d'énergie du dispositif de communication intracorporelle (100-2B).

2. Dispositif de communication intracorporelle (100-2B) selon la revendication 1,
dans lequel l'unité de transmission (102) est configurée pour arrêter la première transmission de trame après qu'un premier échange de trames a été effectué.

3. Dispositif de communication intracorporelle (100-2B) selon la revendication 2,
dans lequel le premier échange de trames comprend un échange entre une trame de notification de transition relative à la notification de début de la seconde transmission de trame et une trame de réponse de notification de transition qui est une réponse à la trame de notification de transition, ou un échange entre la trame de réponse de notification de transition et une trame qui est une réponse à la trame de réponse de notification de transition, ou un échange consécutif d'une trame qui est transmise dans le cas où il n'y a pas de données à transmettre.

4. Dispositif de communication intracorporelle (100-2B) selon l'une quelconque des revendications précédentes,
dans lequel l'unité de transmission (102) est configurée pour arrêter la première transmission de trame après qu'un premier temps, qui est décidé à l'avance, est arrivé.

5. Dispositif de communication intracorporelle (100-2B) selon la revendication 2 ou 3,
dans lequel l'unité de transmission (102) est configurée pour démarrer la première transmission de trame ou pour poursuivre l'arrêt de la première transmission de trame sur la base d'un second échange de trames qui est effectué après l'arrêt de la première transmission de trame.

6. Dispositif de communication intracorporelle (100-2B) selon la revendication 5,
dans lequel le second échange de trames comprend un échange entre une trame de notification de retour relative à la notification d'arrêt de la seconde transmission de trame et une trame de réponse de notification de retour qui est une réponse à la trame de notification de retour, en particulier dans lequel l'unité de transmission (102) est configurée pour transmettre la trame de notification de retour dans la période de transmission de trame qui est spécifiée sur la base d'informations obtenues par une communication avec le partenaire de communication.

7. Dispositif de communication intracorporelle (100-2B) selon l'une quelconque des revendications précédentes,
dans lequel l'unité de transmission (102) est configurée pour démarrer la première transmission de trame ou pour poursuivre l'arrêt de la première transmission de trame sur la base de la réception d'une série de trames après l'arrêt de la première transmission de trame, en particulier dans lequel une trame qui est transmise par l'unité de transmission (102) comprend des informations d'échange de trames à mettre à jour lors de la transmission d'une trame sur la base d'une trame reçue, et
chacune des séries de trames comprend les informations d'échange de trames mises à jour conformément à un modèle qui est décidé à l'avance.

8. Dispositif de communication intracorporelle (100-2B) selon la revendication 4,
dans lequel l'unité de transmission (102) est configurée pour démarrer la première transmission de trame après qu'un second temps, qui est décidé à l'avance, est arrivé, après l'arrêt de la première transmission de trame.

9. Dispositif de communication intracorporelle (100-2B) selon l'une quelconque des revendications précédentes, comprenant en outre :
une unité de réception (104) configurée pour recevoir une trame en utilisant une communication intracorporelle ; et
une unité de commande (108) configurée pour arrêter la réception de trame de l'unité de réception (104) lorsque la première transmission de trame est arrêtée par l'unité de transmission (102), et configurée en outre pour effectuer une commutation entre la présence et l'absence de la première transmission de trame dans un état dans lequel la réception de trame de l'unité de réception (104) est arrêtée.

10. Procédé de communication intracorporelle comprenant :
effectuer, dans un mode de fonctionnement normal, par une unité de transmission (102) d'un dispositif de communication intracorporelle (100-2B), une première transmission de trame en utilisant une communication intracorporelle dans une période de transmission de trame du dispositif de communication intracorporelle (100-2B) qui est décidée à l'avance, dans lequel la première transmission de trame est effectuée indépendamment de la présence ou de l'absence de données à transmettre pour maintenir la connexion de communication intracorporelle ; et
arrêter, dans un mode de veille, par l'unité de transmission (102), la première transmission de trame tandis que la seconde transmission de trame est effectuée par un partenaire de communication (100-2A) dans la période de transmission de trame du dispositif de communication intracorporelle (100-2B) afin de réduire la consommation d'énergie du dispositif de communication intracorporelle (100-2B).

11. Programme informatique comprenant des moyens de code de programme amenant un dispositif de communication intracorporelle (100-2B) selon la revendication 1 à exécuter les étapes du procédé défini dans la revendication 10.
